(19) Europäisches Patentamt
European Patent Office
Office européen des brevets

(11) **EP 4 362 589 A1**

(12) **EUROPEAN PATENT APPLICATION**
published in accordance with Art. 153(4) EPC

(43) Date of publication:
**01.05.2024   Bulletin 2024/18**

(21) Application number: **22848431.7**

(22) Date of filing: **22.07.2022**

(51) International Patent Classification (IPC):
**H04W 72/04** (2023.01)

(52) Cooperative Patent Classification (CPC):
**H04W 72/04**

(86) International application number:
**PCT/CN2022/107294**

(87) International publication number:
**WO 2023/005826 (02.02.2023 Gazette 2023/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.07.2021   RU 2021121990**

(71) Applicant: **Huawei Technologies Co., Ltd.
Shenzhen, Guangdong 518129 (CN)**

(72) Inventors:
• **LI, Yunbo
  Shenzhen, Guangdong 518129 (CN)**

• **GUO, Yuchen
  Shenzhen, Guangdong 518129 (CN)**
• **HUANG, Guogang
  Shenzhen, Guangdong 518129 (CN)**
• **GAN, Ming
  Shenzhen, Guangdong 518129 (CN)**
• **BANKOV, Dmitry
  Moscow 127051 (RU)**
• **KHOROV, Evgeny Mikhailovich
  Moscow 127051 (RU)**
• **LEVITSKY, Ilya
  Moscow 127051 (RU)**

(74) Representative: **Isarpatent
Patent- und Rechtsanwälte
Barth Hassa Peckmann & Partner mbB
Friedrichstraße 31
80801 München (DE)**

(54) **RESOURCE ALLOCATION METHOD AND COMMUNICATION APPARATUS**

(57)    This application provides a resource allocation method and a communication apparatus. The method may include: A first device generates a first frame that is used to request a resource for a first link, where the first link is a link between the first device and a second device, the first frame includes first duration and first information, the first duration is duration required for data transmission over the first link based on a first bandwidth, the first information is used to determine second duration, and the second duration is duration that is allocated by a third device to the first link and that is used for data transmission; and the first device sends the first frame to the third device. According to this application, the third device can allocate a more accurate time resource to the first link.

300

First device ──── Third device

S310: Generate a first frame

S320: First frame →

← S330: Second frame

FIG. 3

EP 4 362 589 A1

**Description**

This application claims priority to Russian Patent Application No. RU2021121990, filed with the Federal Institute of Industrial Property on July 26, 2021 and entitled "RESOURCE ALLOCATION METHOD AND COMMUNICATION APPARATUS", which is incorporated herein by reference in its entirety.

**TECHNICAL FIELD**

This application relates to the field of wireless communication, and more specifically, to a resource allocation method and a communication apparatus.

**BACKGROUND**

A wireless fidelity (Wireless Fidelity, Wi-Fi) system is deployed on an unlicensed spectrum, and a plurality of stations use a channel resource through contention. After succeeding in channel contention, the station may reserve a period of time for data transmission. The period of time is referred to as a transmission opportunity (transmission opportunity, TXOP). A station that successfully reserves a TXOP is referred to as a TXOP holder (TXOP holder). Within the TXOP, only the TXOP holder can actively send data, and another station can only receive the data or send a corresponding response frame.

In the 802.11be standard of the Institute of Electrical and Electronics Engineers (institute of electrical and electronics engineers, IEEE), a TXOP mechanism is extended. To be specific, an access point (access point, AP) serving as a TXOP holder may allocate a part of resources within a reserved TXOP to a first station, and the first station may perform peer to peer (peer to peer, P2P) transmission with a second station or perform uplink data transmission to the AP within allocated time. The mechanism can reduce collisions caused by channel contention by the first station, and improve system efficiency.

Therefore, how the AP allocates an accurate time resource to the first station becomes an urgent problem to be resolved.

**SUMMARY**

This application provides a resource allocation method, so that a third device can allocate an accurate time resource to a link between a first device and a second device.

According to a first aspect, a resource allocation method is provided. The method may include: A first device generates a first frame that is used to request a resource for a first link, where the first link is a link between the first device and a second device, the first frame includes first duration and first information, the first duration is duration required for data transmission over the first link based on a first bandwidth, the first information is used to determine second duration, and the second duration is duration that is allocated by a third device to the first link and that is used for data transmission; and the first device sends the first frame to the third device.

Based on the foregoing technical solution, in addition to the first duration, the first frame sent by the first device to the third device further includes the first information used to determine the second duration. This helps the third device allocate a more accurate time resource to the first link.

For example, the first information includes at least one of the following types: capability information of the first link and M adjustment parameters corresponding to N bandwidth ranges, where both N and M are positive integers.

Optionally, values of N and M are the same.

In a possible implementation, the first information includes the capability information and the M adjustment parameters, and the capability information includes a maximum bandwidth supported by the first link.

Based on the foregoing technical solution, the first device adds the maximum bandwidth supported by the first link and the M adjustment parameters to the first frame, and sends the first frame to the third device. In this way, when a to-be-allocated bandwidth is greater than the maximum bandwidth supported by the first link, the third device can allocate a more accurate time resource to the first link; and the third device may further allocate, based on the M adjustment parameters, a more accurate time resource to the first link for different to-be-allocated bandwidths.

For example, an adjustment parameter corresponding to an $n^{th}$ bandwidth range is a ratio of a data transmission rate that can be achieved in a bandwidth over the first link using a transmission parameter in the first bandwidth to a data transmission rate that can be achieved in the same bandwidth over the first link using a transmission parameter in the $n^{th}$ bandwidth range, n is a positive integer, and $1 \leq n \leq N$.

Based on the foregoing technical solution, the adjustment parameter corresponding to the $n^{th}$ bandwidth range is determined based on the ratio of the data transmission rate in the bandwidth over the first link using the transmission parameter in the first bandwidth to the data transmission rate in the same bandwidth over the first link using the transmission parameter in the $n^{th}$ bandwidth range. Therefore, when the third device allocates a resource to the first link, differences in data transmission rates of transmission parameters supported by the first link in different bandwidths may be considered. This helps the third device allocate a more accurate time resource to the first link.

For example, if the first link does not support an $n^{th}$ bandwidth range, an adjustment parameter corresponding to the $n^{th}$ bandwidth range is set to a preset value, where n is a positive integer, and $1 \leq n \leq N$.

Based on the foregoing technical solution, when the adjustment parameter corresponding to the $n^{th}$ bandwidth range is set to the preset value, the third device may determine, based on the adjustment parameter, that the first link does not support the $n^{th}$ bandwidth range. This may prevent the third device from allocating, to the first link, a channel resource that is not supported by the first link.

In another possible implementation, the first information includes the capability information, and the capability information includes at least one of the following types: a maximum bandwidth supported by the first link, and a modulation and coding scheme MCS or minimum receiver sensitivity supported by the first link in the first bandwidth.

Based on the foregoing technical solution, the first device adds the capability information of the first link to the first frame and sends the first frame to the third device, so that the third device may consider the capability information of the first link when allocating a resource to the first link. This helps the third device allocate a more accurate time resource to the first link.

With reference to the first aspect, in some implementations of the first aspect, the method further includes: The first device receives a second frame from the third device, where the second frame includes the second duration.

According to a second aspect, a resource allocation method is provided. The method may include: A third device receives a first frame, where the first frame is used to request a resource for a first link, the first link is a link between a first device and a second device, the first frame includes first duration and first information, the first duration is duration required for data transmission over the first link based on a first bandwidth, the first information is used to determine second duration, and the second duration is duration that is allocated by the third device to the first link and that is used for data transmission; and the third device sends a second frame to the first device, where the second frame includes the second duration.

Based on the foregoing technical solution, in addition to the first duration, the first frame sent by the first device to the third device further includes the first information used to determine the second duration. This helps the third device allocate a more accurate time resource to the first link.

For example, the first information includes at least one of the following types: capability information of the first link and M adjustment parameters corresponding to N bandwidth ranges, where both N and M are positive integers.

Optionally, values of N and M are the same.

In a possible implementation, the first information includes the M adjustment parameters; and if a to-be-allocated bandwidth does not fall within any one of the N bandwidth ranges, the second duration is determined based on the first bandwidth, the first duration, and the to-be-allocated bandwidth; or if a to-be-allocated bandwidth falls within an $n^{th}$ bandwidth range of the N bandwidth ranges, the second duration is determined based on the first bandwidth, the first duration, the to-be-allocated bandwidth, and an adjustment parameter corresponding to the $n^{th}$ bandwidth range, where n is a positive integer, and $1 \leq n \leq N$.

Based on the foregoing technical solution, the first device adds the M adjustment parameters corresponding to the N bandwidth ranges to the first frame, and sends the first frame to the third device. This helps the third device allocate a more accurate time resource to the first link based on different to-be-allocated bandwidths and adjustment parameters.

In another possible implementation, the first information includes the capability information and the M adjustment parameters, and the capability information includes a maximum bandwidth supported by the first link; and if a to-be-allocated bandwidth does not fall within any one of the N bandwidth ranges, the second duration is determined based on the to-be-allocated bandwidth, the first bandwidth, and the first duration; or if a to-be-allocated bandwidth falls within an $n^{th}$ bandwidth range of the N bandwidth ranges, the second duration is determined based on the to-be-allocated bandwidth, the first bandwidth, the first duration, and an adjustment parameter corresponding to the $n^{th}$ bandwidth range, where n is a positive integer, $1 \leq n \leq N$, and the to-be-allocated bandwidth is less than or equal to the maximum bandwidth.

In another possible implementation, the first information includes the capability information and the M adjustment parameters, and the capability information includes a maximum bandwidth supported by the first link; and if the maximum bandwidth is greater than or equal to a to-be-allocated bandwidth, and the to-be-allocated bandwidth does not fall within any one of the N bandwidth ranges, the second duration is determined based on the to-be-allocated bandwidth, the first bandwidth, and the first duration; or if the maximum bandwidth is less than a to-be-allocated bandwidth, and the maximum bandwidth does not fall within any one of the N bandwidth ranges, the second duration is determined based on the maximum bandwidth, the first bandwidth, and the first duration; or if the maximum bandwidth is greater than or equal to a to-be-allocated bandwidth, and the to-be-allocated bandwidth falls within an $n^{th}$ bandwidth range of the N bandwidth ranges, the second duration is determined based on the to-be-allocated bandwidth, the first bandwidth, the first duration, and an adjustment parameter corresponding to the $n^{th}$ bandwidth range, where n is a positive integer, and $1 \leq n \leq N$; or if

the maximum bandwidth is less than a to-be-allocated bandwidth, and the maximum bandwidth falls within the $n^{th}$ bandwidth range, the second duration is determined based on the maximum bandwidth, the first bandwidth, the first duration, and an adjustment parameter corresponding to the $n^{th}$ bandwidth range.

Based on the foregoing technical solution, the first device adds the maximum bandwidth supported by the first link and the M adjustment parameters to the first frame, and sends the first frame to the third device. In this way, when a to-be-allocated bandwidth is greater than the maximum bandwidth supported by the first link, the third device can allocate a more accurate time resource to the first link; and the third device may further allocate, based on the M adjustment parameters, a more accurate time resource to the first link for different to-be-allocated bandwidths.

For example, an adjustment parameter corresponding to an $n^{th}$ bandwidth range is a ratio of a data transmission rate that can be achieved in a bandwidth over the first link using a transmission parameter in the first bandwidth to a data transmission rate that can be achieved in the same bandwidth over the first link using a transmission parameter in the $n^{th}$ bandwidth range, n is a positive integer, and $1 \leq n \leq N$.

Based on the foregoing technical solution, the adjustment parameter corresponding to the $n^{th}$ bandwidth range is determined based on the ratio of the data transmission rate in the bandwidth over the first link using the transmission parameter in the first bandwidth to the data transmission rate in the same bandwidth over the first link using the transmission parameter in the $n^{th}$ bandwidth range. Therefore, when the third device allocates a resource to the first link, differences in data transmission rates of transmission parameters supported by the first link in different bandwidths may be considered. This helps the third device allocate a more accurate time resource to the first link.

For example, if the first link does not support the $n^{th}$ bandwidth range of the N bandwidth ranges, the adjustment parameter corresponding to the $n^{th}$ bandwidth range is set to a preset value, where n is a positive integer, and $1 \leq n \leq N$.

Based on the foregoing technical solution, when the adjustment parameter corresponding to the $n^{th}$ bandwidth range is set to the preset value, the third device may determine, based on the adjustment parameter, that the first link does not support the $n^{th}$ bandwidth range. This may prevent the third device from allocating, to the first link, a channel resource that is not supported by the first link.

In still another possible implementation, the first information includes the capability information, and the capability information includes at least one of the following types: a maximum bandwidth supported by the first link, and a modulation and coding scheme MCS or minimum receiver sensitivity supported by the first link in the first bandwidth.

For example, the capability information includes the maximum bandwidth, the second duration is determined based on a to-be-allocated bandwidth, the first bandwidth, and the first duration, and the to-be-allocated bandwidth is less than or equal to the maximum bandwidth.

For example, the capability information includes the maximum bandwidth, and if the maximum bandwidth is greater than or equal to a to-be-allocated bandwidth, the second duration is determined based on the to-be-allocated bandwidth, the first bandwidth, and the first duration; or if the maximum bandwidth is less than a to-be-allocated bandwidth, the second duration is determined based on the maximum bandwidth, the first bandwidth, and the first duration.

Based on the foregoing technical solution, the first device adds the maximum bandwidth supported by the first link to the first frame, and sends the first frame to the third device. In this way, when a to-be-allocated bandwidth is greater than the maximum bandwidth supported by the first link, the third device can allocate a more accurate time resource to the first link.

In another example, the capability information includes an MCS or minimum receiver sensitivity supported by the first link in the first bandwidth; and if a to-be-allocated bandwidth is not equal to the first bandwidth, the second duration is determined based on the to-be-allocated bandwidth, the first bandwidth, the first duration, and the capability information.

Based on the foregoing technical solution, the first device adds, to the first frame, the MCS or the minimum receiver sensitivity supported by the first link in the first bandwidth, and sends the first frame to the third device. Therefore, when a to-be-allocated bandwidth is not equal to the first bandwidth, the third device can allocate a more accurate time resource to the first link based on the MCS or the minimum receiver sensitivity supported by the first link in the first bandwidth.

In still another example, the capability information includes the maximum bandwidth, and the MCS or the minimum receiver sensitivity supported by the first link in the first bandwidth; and if a to-be-allocated bandwidth is not equal to the first bandwidth, the second duration is determined based on the to-be-allocated bandwidth, the first bandwidth, the first duration, and the MCS or the minimum receiver sensitivity supported by the first link in the first bandwidth, where the to-be-allocated bandwidth is less than or equal to the maximum bandwidth.

In still another example, the capability information includes the maximum bandwidth, and the MCS or the minimum receiver sensitivity supported by the first link in the first bandwidth; and if the maximum bandwidth is greater than or equal to a to-be-allocated bandwidth, and the to-be-allocated bandwidth is not equal to the first bandwidth, the second duration is determined based on the to-be-allocated bandwidth, the first bandwidth, the first duration, and the MCS or the minimum receiver sensitivity supported by the first link in the first bandwidth; or if the maximum bandwidth is less than a to-be-allocated bandwidth, and the maximum bandwidth is not equal to the first bandwidth, the second duration is determined based on the maximum bandwidth, the first bandwidth, the first duration, and the MCS or the minimum receiver sensitivity supported by the first link in the first bandwidth.

According to a third aspect, a resource allocation method is provided. The method may include: A first device generates a first frame that is used to request a resource for a first link, where the first link is a link between the first device and a second device, the first frame includes M pieces of duration corresponding to N bandwidths, and duration corresponding to an $n^{th}$ bandwidth is duration required for data transmission over the first link in the $n^{th}$ bandwidth, where N, M, and n are positive integers, and $1 \leq n \leq N$; and the first device sends the first frame to a third device.

Based on the foregoing technical solution, the first frame sent by the first device to the third device includes a plurality of pieces of duration corresponding to different bandwidths. This helps the third device allocate a more accurate time resource to the first link based on a bandwidth that is currently to be allocated.

With reference to the third aspect, in some implementations of the third aspect, if the first link does not support the $n^{th}$ bandwidth, the duration corresponding to the $n^{th}$ bandwidth is set to a preset value.

Based on the foregoing technical solution, when the duration corresponding to the $n^{th}$ bandwidth is set to the preset value, the third device may determine, based on the duration, that the first link does not support the $n^{th}$ bandwidth. This may prevent the third device from allocating, to the first link, a channel resource that is not supported by the first link.

With reference to the third aspect, in some implementations of the third aspect, the method further includes: The first device receives a second frame from the third device, where the second frame includes second duration allocated to the first link, and the second duration is determined based on the M pieces of duration.

According to a fourth aspect, a resource allocation method is provided. The method may include: A third device receives a first frame from a first device, where the first frame is used to request a resource for a first link, the first link is a link between the first device and a second device, the first frame includes M pieces of duration corresponding to N bandwidths, and duration corresponding to an $n^{th}$ bandwidth is duration required for data transmission over the first link in the $n^{th}$ bandwidth, where N, M, and n are positive integers, and $1 \leq n \leq N$; and the third device sends a second frame to the first device, where the second frame includes second duration allocated to the first link, and the second duration is determined based on the M pieces of duration.

Based on the foregoing technical solution, the first frame sent by the first device to the third device includes a plurality of pieces of duration corresponding to different bandwidths. This helps the third device allocate a more accurate time resource to the first link based on a bandwidth that is currently to be allocated.

With reference to the fourth aspect, in some implementations of the fourth aspect, if a to-be-allocated bandwidth is equal to the $n^{th}$ bandwidth, the second duration is the duration corresponding to the $n^{th}$ bandwidth.

With reference to the fourth aspect, in some implementations of the fourth aspect, if the first link does not support the $n^{th}$ bandwidth, the duration corresponding to the $n^{th}$ bandwidth is set to a preset value.

Based on the foregoing technical solution, when the duration corresponding to the $n^{th}$ bandwidth is set to the preset value, the third device may determine, based on the duration, that the first link does not support the $n^{th}$ bandwidth. This may prevent the third device from allocating, to the first link, a channel resource that is not supported by the first link.

According to a fifth aspect, a communication apparatus is provided. The communication apparatus may be a terminal device or a component in a terminal device. The communication apparatus may include modules or units configured to perform the method according to any one of the first aspect and the possible implementations of the first aspect.

According to a sixth aspect, a communication apparatus is provided. The communication apparatus may be a terminal device or a component in a terminal device. The communication apparatus may include modules or units configured to perform the method according to any one of the second aspect and the possible implementations of the second aspect.

According to a seventh aspect, a communication apparatus is provided. The communication apparatus includes a processing unit and a transceiver unit. The processing unit is configured to generate a first frame that is used to request a resource for a first link, where the first link is a link between the communication apparatus and a second device, the first frame includes M pieces of duration corresponding to N bandwidths, and duration corresponding to an $n^{th}$ bandwidth is duration required for data transmission over the first link in the $n^{th}$ bandwidth, where N, M, and n are positive integers, and $1 \leq n \leq N$. The transceiver unit is configured to send the first frame to a third device.

With reference to the seventh aspect, in some implementations of the seventh aspect, if the first link does not support the $n^{th}$ bandwidth, the duration corresponding to the $n^{th}$ bandwidth is set to a preset value.

With reference to the seventh aspect, in some implementations of the seventh aspect, the transceiver unit is further configured to receive a second frame from the third device, where the second frame includes second duration allocated to the first link, and the second duration is determined based on the M pieces of duration.

According to an eighth aspect, a communication apparatus is provided. The communication apparatus includes a receiving unit and a sending unit. The receiving unit is configured to receive a first frame from a first device, where the first frame is used to request a resource for a first link, the first link is a link between the first device and a second device, the first frame includes M pieces of duration corresponding to N bandwidths, and duration corresponding to an $n^{th}$

bandwidth is duration required for data transmission over the first link in the $n^{th}$ bandwidth, where N, M, and n are positive integers, and $1 \leq n \leq N$. The sending unit is configured to send a second frame to the first device, where the second frame includes second duration allocated to the first link, and the second duration is determined based on the M pieces of duration.

With reference to the eighth aspect, in some implementations of the eighth aspect, if a to-be-allocated bandwidth is equal to the $n^{th}$ bandwidth, the second duration is the duration corresponding to the $n^{th}$ bandwidth.

With reference to the eighth aspect, in some implementations of the eighth aspect, if the first link does not support the $n^{th}$ bandwidth, the duration corresponding to the $n^{th}$ bandwidth is set to a preset value.

According to a ninth aspect, a communication apparatus is provided, and includes a processor. The processor is coupled to a memory, and may be configured to execute instructions in the memory, to implement the method in any one of the first aspect or the possible implementations of the first aspect, or implement the method in any one of the third aspect or the possible implementations of the third aspect. Optionally, the communication apparatus further includes the memory. Optionally, the communication apparatus further includes a communication interface, and the processor is coupled to the communication interface.

In an implementation, the communication apparatus is a first device. When the communication apparatus is the first device, the communication interface may be a transceiver or an input/output interface.

In another implementation, the communication apparatus is a chip disposed in a first device. When the communication apparatus is the chip disposed in the first device, the communication interface may be an input/output interface.

Optionally, the transceiver may be a transceiver circuit. Optionally, the input/output interface may be an input/output circuit.

According to a tenth aspect, a communication apparatus is provided, and includes a processor. The processor is coupled to a memory, and may be configured to execute instructions in the memory, to implement the method in any one of the second aspect or the possible implementations of the second aspect, or the method in any one of the fourth aspect or the possible implementations of the fourth aspect. Optionally, the communication apparatus further includes the memory. Optionally, the communication apparatus further includes a communication interface, and the processor is coupled to the communication interface.

In an implementation, the communication apparatus is a third device. When the communication apparatus is the third device, the communication interface may be a transceiver or an input/output interface.

In another implementation, the communication apparatus is a chip disposed in a third device. When the communication apparatus is the chip disposed in the third device, the communication interface may be an input/output interface.

Optionally, the transceiver may be a transceiver circuit. Optionally, the input/output interface may be an input/output circuit.

According to an eleventh aspect, a processor is provided, and includes an input circuit, an output circuit, and a processing circuit. The processing circuit is configured to: receive a signal through the input circuit, and transmit a signal through the output circuit, to enable the processor to perform the method in any one of the possible implementations of the first aspect to the fourth aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a twelfth aspect, a processing apparatus is provided, and includes a processor and a memory. The processor is configured to: read instructions stored in the memory, receive a signal via a receiver, transmit a signal via a transmitter, and perform the method according to any possible implementation of the first aspect to the fourth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that, a related data exchange process such as sending of indication information may be a process of outputting the indication information from the processor, and receiving of capability information may be a process of receiving input capability information by the processor. Specifically, data output by the processor may be output to the transmitter, and input data received by the processor may be from the receiver. The transmitter and the receiver may be collectively referred to as a transceiver.

The processing apparatus in the twelfth aspect may be one or more chips. The processor in the processing apparatus may be implemented by hardware, or may be implemented by software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a thirteenth aspect, a computer program product is provided. The computer program product includes a computer program (which may also be referred to as code or instructions). When the computer program is run, a computer is enabled to perform the method according to any one of the possible implementations of the first aspect to the fourth aspect.

According to a fourteenth aspect, a computer-readable storage medium is provided. The computer-readable storage medium stores a computer program (which may also be referred to as code or instructions). When the computer program is run on a computer, the method in any one of the possible implementations of the first aspect to the fourth aspect is performed.

According to a fifteenth aspect, a communication system is provided, including the foregoing first device and the foregoing third device.

## BRIEF DESCRIPTION OF DRAWINGS

FIG. 1 is a schematic diagram of a communication system to which an embodiment of this application is applicable;
FIG. 2 is a schematic diagram of allocating a resource to a first station by an AP;
FIG. 3 is a schematic flowchart of a method according to an embodiment of this application;
FIG. 4 to FIG. 8 each are a schematic diagram of a frame format of a first frame according to an embodiment of this application;
FIG. 9 is a schematic flowchart of a method according to another embodiment of this application;
FIG. 10 is a schematic diagram of a frame format of a first frame according to an embodiment of this application;
FIG. 11 and FIG. 12 each are a schematic diagram of a communication apparatus according to an embodiment of this application;
FIG. 13 is a schematic block diagram of another communication apparatus according to an embodiment of this application; and
FIG. 14 is a schematic diagram of a chip system according to an embodiment of this application.

## DESCRIPTION OF EMBODIMENTS

The following describes technical solutions of this application with reference to accompanying drawings.

Embodiments of this application may be applied to a wireless local area network (wireless local area network, WLAN). Currently, a standard used by the WLAN is the Institute of Electrical and Electronics engineers (institute of electrical and electronics engineers, IEEE) 802.11 series. The WLAN may include a plurality of basic service sets (basic service set, BSS), and network nodes in a BSS are a station (station, STA) and an access point (access point, AP). Each BSS may include one AP and a plurality of STAs associated with the AP.

The AP in embodiments of this application may also be referred to as a wireless access point, a hotspot, or the like. The AP is an access point used by a mobile user to access a wired network, and is mainly deployed in a home, inside a building, and in a campus. The AP has a typical coverage radius of tens of meters to hundreds of meters. Certainly, the AP may alternatively be deployed outdoors. The AP is equivalent to a bridge that connects the wired network and a wireless network. Main functions of the AP are to connect wireless network clients together, and then connect the wireless network to the Ethernet. Specifically, the AP may be a device that supports the 802.11ax standard. Further, optionally, the AP may be a device that supports a plurality of WLAN standards, such as 802.11ac, 802.11n, 802.11g, 802.11b, 802.11a, or a later version.

The STA in embodiments of this application may be a wireless communication chip, a wireless sensor, or a wireless communication terminal. For example, the STA may be a mobile phone, a tablet computer, a set-top box, a smart television set, a smart wearable device, an invehicle communication device, a computer, or the like that supports a Wi-Fi communication function. Optionally, the STA may support the 802.11ax standard. Further, optionally, the STA may support a plurality of WLAN standards such as 802.11ac, 802.11n, 802.11g, 802.11b, 802.11a, or a later version.

In embodiments of this application, the STA or the AP includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that communication can be performed according to the method provided in embodiments of this application by running a program that records code of the method provided in embodiments of this application. For example, the execution body of the method provided in embodiments of this application may be a STA, an AP, or a functional module that is in a STA or an AP and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include, and/or carry instructions and/or data.

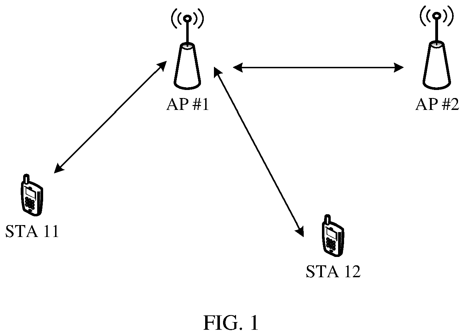

FIG. 1 is a schematic diagram of a network architecture of a wireless local area network applicable to an embodiment of this application. As shown in FIG. 1, one AP may be associated with one or more STAs, that is, one AP may communicate with the one or more STAs. As shown in FIG. 1, the network architecture of the wireless local area network may further include a plurality of APs, and different APs may also communicate with each other. For example, as shown in FIG. 1, the figure shows an AP #1, an AP #2, and a STA 11 and a STA 12 that are associated with the AP #1. Data transmission may be performed between the AP #1 and the STA 11 or the STA 12, data transmission may be performed between the STA 11 and the STA 12, and communication may be performed between the AP #1 and the AP #2.

It should be understood that FIG. 1 is merely an example, and should not be limited to the network architecture of the wireless local area network to which this application is applicable. For example, the network architecture may further include more APs, and each AP may further associate with more STAs. This is not limited in this embodiment of this application.

A Wi-Fi (for example, an IEEE 802.11 series) system is deployed on an unlicensed spectrum, and a plurality of stations use a channel resource through contention. In a common enhanced distributed channel access (enhanced distributed channel access, EDCA) contention mechanism, a station sends a first frame after completing channel backoff. If there is a response frame in the first frame, after the station successfully receives the response frame, it indicates that the station succeeds in channel contention. Otherwise, the station needs to perform backoff again. If the first frame does not require the response frame, it indicates that the station succeeds in channel contention after sending the first frame. After succeeding in channel contention, the station may reserve a period of time for data transmission. The period of time is referred to as a transmission opportunity (transmission opportunity, TXOP). A station that successfully reserves a TXOP is referred to as a TXOP holder (TXOP holder). Within the TXOP, only the TXOP holder can actively send data, and another station can only receive the data or send a corresponding response frame.

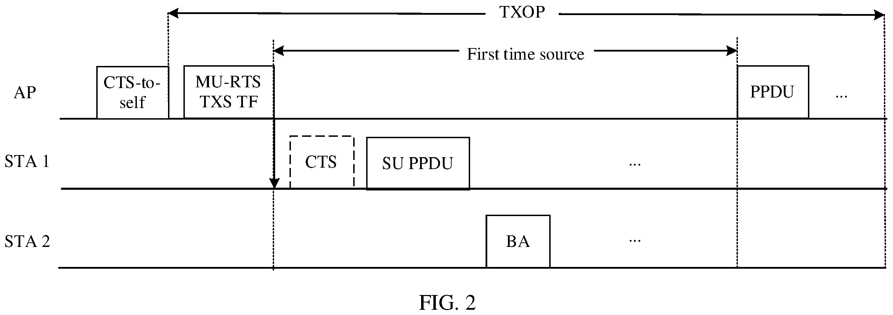

For example, an AP in FIG. 2 succeeds in channel contention by using a clear-to-send-to-self (clear-to-send-to-self, CTS-to-self) mechanism of the AP, and reserves a TXOP for data transmission.

In the IEEE 802.11be standard, a TXOP mechanism is extended. To be specific, an AP serving as a TXOP holder may allocate a part of reserved TXOP resources to a first station, and the first station may perform peer to peer (peer to peer, P2P) transmission with a second station or perform uplink data transmission to the AP within allocated time. The mechanism can reduce collisions caused by channel contention by the first station, and improve system efficiency. A P2P link used for P2P transmission herein is established by two non-access point stations (non-AP STAs) by using a tunnel direct link setup (tunnel direct link setup, TDLS) or another P2P protocol. P2P may also be referred to as device to device (device to device, D2D), TDLS, or the like.

For example, the AP in FIG. 2 sends a multiple user request to send TXOP sharing trigger frame (multiple user request to send TXOP sharing trigger frame, MU-RTS TXS TF) to a STA 1, to allocate a first time resource to the STA 1. The STA 1 may send a single user physical protocol data unit (single user physical protocol data unit, SU PPDU) to a STA 2 by using the first time resource. After receiving the SU PPDU, the STA 2 returns a block acknowledgment (block acknowledge, BA) frame to the STA 1.

Before allocating a time resource to the first station, the AP needs to learn of a resource requirement of the first station. Therefore, before the AP allocates a resource to the first station, the first station sends a required time request to the AP. Specifically, the first station sends a required resource request frame to the AP, the required resource request frame includes a time length, and the time length corresponds to a reference bandwidth. The reference bandwidth may be specified in a standard, or may be carried in the required resource request frame. A time resource requested by the required resource request frame is used for P2P data transmission. After obtaining the TXOP, the AP allocates duration to the first station based on a to-be-allocated bandwidth (which usually is an actual bandwidth of a current TXOP), the reference bandwidth, and the time length in the required resource request frame.

For example, the time length in the required resource request frame is 4 milliseconds (ms), and the reference bandwidth is 20 megahertz (MHz). In this case, when the TXOP obtained by the AP is a bandwidth of 20 MHz, duration allocated by the AP to the first station is 4 ms. When the TXOP obtained by the AP is 80 MHz, duration allocated to the first station is 4 ms×20 MHz/80 MHz=1 ms.

However, the foregoing method for determining, by the AP, the time resource allocated to the first station is not accurate.

In view of this, embodiments of this application provide a resource allocation method, so that an AP can allocate a more accurate time resource to a first station.

The following describes the resource allocation method provided in embodiments of this application with reference to the accompanying drawings.

It should be understood that, merely for ease of understanding and description, interaction between a first device and a third device is used as an example below to describe in detail the method provided in embodiments of this application. However, this should not constitute a limitation on an execution body of the method provided in this application. For example, the first device shown in the following embodiments may be replaced with a component (such as a chip or a chip system) configured in the first device, and the third device shown in the following embodiments may be replaced with a component (such as a chip or a chip system) configured in the third device.

A specific structure of the execution body of the method provided in embodiments of this application is not particularly limited in embodiments shown in the following specification, provided that communication can be performed according to the method provided in embodiments of this application by running a program that records code of the method provided in embodiments of this application. For example, the execution body of the method provided in embodiments of this application may be the first device or the third device, or a functional module that is in the first device or the third device and that can invoke a program and execute the program.

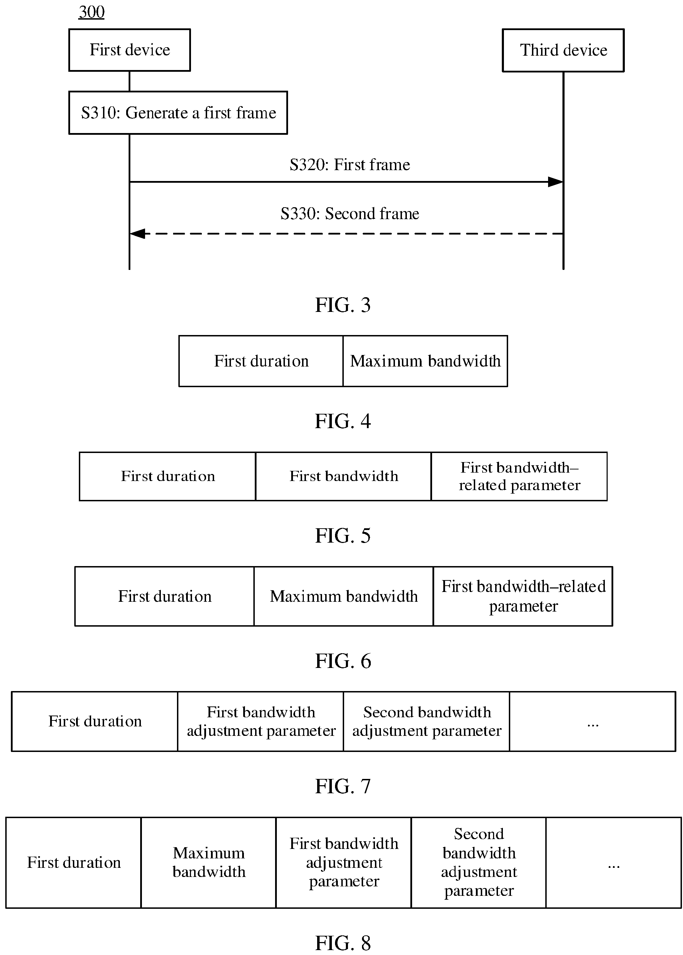

FIG. 3 is a schematic flowchart of a resource allocation method 300 according to an embodiment of this application from a perspective of device interaction. The method 300 may be applied to the network architecture shown in FIG. 1. The following describes in detail steps of the method 300 shown in FIG. 3.

S310: A first device generates a first frame.

S320: The first device sends the first frame. Correspondingly, in S320, a third device receives the first frame.

The first frame is used to request a resource for a first link, and the first link is a link between the first device and a second device. The first frame includes first duration and first information. The first duration is duration required for data transmission over the first link based on a first bandwidth, and the first bandwidth may also be referred to as a reference bandwidth. The first bandwidth may be predefined in a protocol, or may be carried in the first frame. This is not limited in embodiments of this application. The first information is used to determine second duration, and the second duration is duration that is allocated by the third device to the first link and that is used for data transmission.

For example, the first frame may be referred to as a required resource request frame or a request frame. This is not limited in this embodiment of this application.

Specific content of the first information is not limited in this embodiment of this application. Any information that can be used to determine the second duration may be equivalent to the first information in this embodiment of this application. For example, the first information includes at least one of the following types: capability information of the first link and M adjustment parameters corresponding to N bandwidth ranges, where M and N are positive integers.

In a possible implementation, the first information includes the capability information of the first link. The capability information of the first link includes at least one of the following types: a maximum bandwidth supported by the first link, and a modulation and coding scheme (modulation and coding scheme, MSC) or minimum receiver sensitivity supported by the first link in the first bandwidth.

It should be understood that the minimum receiver sensitivity may be indicated by a received signal strength indicator (received signal strength indicator, RSSI). Therefore, the minimum receiver sensitivity supported by the first link in the first bandwidth may be replaced with an RSSI supported by the first link in the first bandwidth.

It may be understood that the capability information of the first link is determined by the first device and the second device through negotiation. In other words, the capability information of the first link is determined based on capability information of the first device and capability information of the second device. Specifically, a manner in which the first device obtains the capability information of the first link is not limited in this embodiment of this application.

In an example, the capability information of the first link includes the maximum bandwidth supported by the first link. In other words, the first frame includes the first duration and the maximum bandwidth supported by the first link. For example, a frame format of the first frame is shown in FIG. 4.

In another example, the capability information of the first link includes the MCS or the minimum receiver sensitivity supported by the first link in the first bandwidth. In other words, the first frame includes the first duration and the MCS or the minimum receiver sensitivity supported by the first link in the first bandwidth. For example, a frame format of the first frame is shown in FIG. 5. A first bandwidth-related parameter in FIG. 5 is the MCS/minimum receiver sensitivity/RSSI supported by the first link in the first bandwidth. It should be understood that, in FIG. 5, only an example in which the first bandwidth is carried in the first frame is used. That the first bandwidth is definitely carried in the first frame is not limited in this embodiment of this application. Alternatively, the first bandwidth may be predetermined in a standard.

In still another example, the capability information of the first link includes the maximum bandwidth supported by the first link, and the MCS or the minimum receiver sensitivity supported by the first link in the first bandwidth. In other words, the first frame includes the first duration, the maximum bandwidth supported by the first link, and the MCS and the minimum receiver sensitivity supported by the first link in the first bandwidth. For example, a frame format of the first frame is shown in FIG. 6.

In another possible implementation, the first information includes the M adjustment parameters corresponding to the N bandwidth ranges. In other words, the first frame includes the first duration and the M adjustment parameters. For example, a frame format of the first frame is shown in FIG. 7.

For example, if the first link supports an $n^{th}$ bandwidth range of the N bandwidth ranges, an adjustment parameter corresponding to the $n^{th}$ bandwidth range is a ratio of a data transmission rate that can be achieved in a bandwidth over the first link using a transmission parameter (other than a bandwidth parameter) in the first bandwidth to a data transmission rate that can be achieved in the same bandwidth over the first link using a transmission parameter in the $n^{th}$ bandwidth range. Alternatively, the adjustment parameter corresponding to the $n^{th}$ bandwidth range is a ratio of a data transmission rate that can be achieved in a bandwidth over the first link using a transmission parameter in the $n^{th}$ bandwidth range to a data transmission rate that can be achieved in the same bandwidth over the first link using a transmission parameter in the first bandwidth. n is a positive integer, and $1 \leq n \leq N$. For example, the transmission parameter includes the MCS, a number of spatial streams (number of spatial streams, NSS).

For example, the first bandwidth is 80 MHz, and the first link may support two spatial streams and an MCS 11 (that is, 1024-quadrature amplitude modulation (quadrature amplitude modulation, QAM), 5/6 bit rate) in the first bandwidth; and the $n^{th}$ bandwidth range is (80 MHz, 160 MHz], and the first link may support two spatial streams and an MCS 9 (that is, 256-QAM and a 5/6 bit rate) in the $n^{th}$ bandwidth range. The NSS supported by the first link in the first bandwidth range and the NSS supported by the first link in the $n^{th}$ bandwidth range are the same, and, in a same bandwidth, a data transmission rate of the MCS 9 is 0.8 times a data transmission rate of the MCS 11. Therefore, the adjustment parameter corresponding to the $n^{th}$ bandwidth range may be set to 1.25 or 0.8.

Optionally, the adjustment parameter corresponding to the $n^{th}$ bandwidth range is a ratio of a data transmission rate that can be achieved in a bandwidth over the first link using a transmission parameter supported by the first link in the first bandwidth to a data transmission rate that can be achieved in the same bandwidth over the first link using a transmission parameter supported by the first link in the $n^{th}$ bandwidth range. Optionally, the transmission parameter supported by the first link in the first bandwidth is a transmission parameter that has optimal performance and that is supported by the first link in the first bandwidth, and the transmission parameter supported by the first link in the $n^{th}$ bandwidth range is a transmission parameter that has optimal performance and that is supported by the first link in the $n^{th}$ bandwidth range. It should be understood that, in a same bandwidth, data can be transmitted over the first link at a maximum rate based on a transmission parameter with optimal performance. In other words, the adjustment parameter corresponding to the $n^{th}$ bandwidth range is a ratio of a maximum data transmission rate that can be achieved in a bandwidth over the first link using a transmission parameter supported by the first link in the first bandwidth to a maximum data transmission rate that can be achieved in the same bandwidth over the first link using a transmission parameter supported by the first link in the $n^{th}$ bandwidth range. Certainly, the adjustment parameter corresponding to the $n^{th}$ bandwidth range is the ratio of the maximum data transmission rate that can be achieved in the bandwidth over the first link using the transmission parameter supported by the first link in the first bandwidth to the maximum data transmission rate that can be achieved in the same bandwidth over the first link using the transmission parameter supported by the first link in the $n^{th}$ bandwidth range. This is not limited in this embodiment of this application.

Optionally, the adjustment parameter corresponding to the $n^{th}$ bandwidth range is a ratio of an expected data transmission rate that can be achieved in a bandwidth over the first link using a transmission parameter in the first bandwidth to an expected data transmission rate that can be achieved in the same bandwidth over the first link using a transmission parameter in the $n^{th}$ bandwidth range.

If the first link does not support the $n^{th}$ bandwidth range of the N bandwidth ranges, the adjustment parameter corresponding to the $n^{th}$ bandwidth range is set to a preset value. For example, the adjustment parameter corresponding to the $n^{th}$ bandwidth range is set to 0.

For example, the N bandwidth ranges include one or more of the following: (80 MHz, 160 MHz] and (160 MHz, 320 MHz]. For example, the N bandwidth ranges include (80 MHz, 160 MHz] and (160 MHz, 320 MHz], a first bandwidth adjustment parameter in FIG. 7 corresponds to (80 MHz, 160 MHz], and a second adjustment parameter corresponds to (160 MHz, 320 MHz].

Correspondences between the N bandwidth ranges and the M adjustment parameters are not limited in this embodiment of this application.

In an example, the N bandwidth ranges one-to-one correspond to the M adjustment parameters, that is, N=M. For example, if the first link supports the N bandwidth ranges, the M adjustment parameters that one-to-one correspond to the N bandwidth ranges may be set.

In another example, the M adjustment parameters one-to-one correspond to M bandwidth ranges of the N bandwidth ranges, that is, M<N. For example, if the first link does not support some of the N bandwidth ranges, M adjustment parameters corresponding to bandwidth ranges supported by the first link may be set.

Optionally, the adjustment parameter corresponding to the $n^{th}$ bandwidth range specifically corresponds to a bandwidth value in the $n^{th}$ bandwidth range. In other words, the M adjustment parameters correspond to N bandwidth values. In an example, N bandwidths one-to-one correspond to the M adjustment parameters, that is, the M adjustment parameters that one-to-one correspond to the N bandwidths may be set. In another example, the M adjustment parameters one-to-one correspond to M bandwidths of the N bandwidths.

In this case, if the first link supports an $n^{th}$ bandwidth of the N bandwidths, an adjustment parameter corresponding to the $n^{th}$ bandwidth is a ratio of a data transmission rate that can be achieved in a bandwidth over the first link using a transmission parameter in the first bandwidth to a data transmission rate that can be achieved in the same bandwidth over the first link using a transmission parameter in the $n^{th}$ bandwidth. Alternatively, the adjustment parameter corresponding to the $n^{th}$ bandwidth is a ratio of a data transmission rate that can be achieved in a bandwidth over the first link using a transmission parameter in the $n^{th}$ bandwidth to a data transmission rate that can be achieved in the same bandwidth over the first link using a transmission parameter in the first bandwidth. If the first link does not support the $n^{th}$ bandwidth of the N bandwidths, the adjustment parameter corresponding to the $n^{th}$ bandwidth is set to a preset value. For example, the adjustment parameter corresponding to the $n^{th}$ bandwidth is set to 0.

Optionally, the adjustment parameter corresponding to the $n^{th}$ bandwidth is a ratio of a data transmission rate that can be achieved in a bandwidth over the first link using a transmission parameter supported by the first link in the first bandwidth to a data transmission rate that can be achieved in the same bandwidth over the first link using a transmission parameter supported by the first link in the $n^{th}$ bandwidth. Optionally, the transmission parameter supported by the first link in the first bandwidth is a transmission parameter that has optimal performance and that is supported by the first link in the first bandwidth, and the transmission parameter supported by the first link in the $n^{th}$ bandwidth is a transmission parameter that has optimal performance and that is supported by the first link in the $n^{th}$ bandwidth. It should be understood that, in a same bandwidth, data can be transmitted over the first link at a maximum rate based on a transmission parameter with optimal performance. In other words, the adjustment parameter corresponding to the $n^{th}$ bandwidth is a ratio of a maximum data transmission rate that can be achieved in a bandwidth over the first link using a transmission parameter supported by the first link in the first bandwidth to a maximum data transmission rate that can be achieved in the same bandwidth over the first link using a transmission parameter supported by the first link in the $n^{th}$ bandwidth. Certainly, the adjustment parameter corresponding to the $n^{th}$ bandwidth is the ratio of the maximum data transmission rate that can be achieved in the bandwidth over the first link using the transmission parameter supported by the first link in the first bandwidth to the maximum data transmission rate that can be achieved in the same bandwidth over the first link using the transmission parameter supported by the first link in the $n^{th}$ bandwidth. This is not limited in this embodiment of this application.

Optionally, the adjustment parameter corresponding to the $n^{th}$ bandwidth is a ratio of an expected data transmission rate that can be achieved in a bandwidth over the first link using a transmission parameter in the first bandwidth to an expected data transmission rate that can be achieved in the same bandwidth over the first link using a transmission parameter in the $n^{th}$ bandwidth.

For example, the N bandwidths include one or more of the following: 160 MHz and 320 MHz. For example, the N bandwidths include 160 MHz and 320 MHz. A first bandwidth adjustment parameter in FIG. 7 corresponds to a 160 MHz bandwidth, and a second adjustment parameter in FIG. 7 corresponds to a 320 MHz bandwidth.

Optionally, the first frame further includes indication information, and the indication information indicates whether the first link includes a station (20 MHz-only STA) that supports only a 20 MHz bandwidth. For example, a size of the indication information is 1 bit.

In still another possible implementation, the first information includes the capability information of the first link and the N adjustment parameters, and the capability information of the first link includes a maximum bandwidth supported by the first link. In other words, the first frame includes the first duration, the maximum bandwidth supported by the first link, and the N adjustment parameters. For example, a frame format of the first frame is shown in FIG. 8.

It should be noted that the third device in this embodiment of this application is an AP, and the first device and the second device may be APs or STAs.

In an example, the first device is a STA (denoted as a STA #1), the second device is another STA (denoted as a STA #2), and the first link is a P2P link between the STA #1 and the STA #2. The STA #1 and the STA #2 may transmit data through the P2P link.

In another example, the first device is a shared AP (shared AP) in an AP coordination scenario, the second device is a STA associated with the shared AP, and the first link is a link between the shared AP and the STA. The shared AP may transmit data to the STA through the first link. In this example, the third device may be referred to as a sharing AP (sharing AP).

In S320, after the third device receives the first frame from the first device, if the third device can allocate a resource to the first device, the third device determines, based on the first duration and the first information that are carried in the first frame, the second duration allocated to the first link, and sends a second frame to the first device, where the second frame includes the second duration.

S330: The third device sends the second frame. Correspondingly, in S330, the first device receives the second frame.

The second frame includes the second duration, and the second duration is determined by the third device based on a to-be-allocated bandwidth, the first bandwidth, the first duration, and the first information.

The to-be-allocated bandwidth is a bandwidth that is determined by the third device and that can be allocated to the first link, and the to-be-allocated bandwidth is less than or equal to a TXOP bandwidth currently obtained by the third device.

For example, the second frame may be referred to as a resource allocation frame or an MU-RTS TXS TF. This is not limited in this embodiment of this application.

As described above, the first information may include different parameters. Correspondingly, manners of determining the second duration by the third device based on the to-be-allocated bandwidth, the first bandwidth, the first duration, and the first information are also different.

In a possible implementation (denoted as a manner 1), the first information includes the capability information of the first link, and the capability information of the first link includes the maximum bandwidth supported by the first link.

Correspondingly, a manner in which the third device determines the second duration based on the to-be-allocated bandwidth, the first bandwidth, the first duration, and the first information includes: The third device determines the second duration based on the to-be-allocated bandwidth, the first bandwidth, and the first duration. The to-be-allocated bandwidth is less than or equal to the maximum bandwidth. That is, in a case in which the first frame carries the maximum bandwidth, when the third device allocates a resource to the first device, the third device ensures that the to-be-allocated bandwidth is less than or equal to the maximum bandwidth.

Certainly, the third device may also determine a to-be-allocated bandwidth greater than the maximum bandwidth. Therefore, a manner in which the third device determines the second duration based on the to-be-allocated bandwidth, the first bandwidth, the first duration, and the first information may include: If the maximum bandwidth is greater than or equal to the to-be-allocated bandwidth, the third device determines the second duration based on the to-be-allocated bandwidth, the first bandwidth, and the first duration; or if the maximum bandwidth is less than the to-be-allocated bandwidth, the third device determines the second duration based on the maximum bandwidth, the first bandwidth, and the first duration.

For example, when determining the second duration based on the to-be-allocated bandwidth, the first bandwidth, and the first duration, the third device determines the second duration according to a formula (1):

$$\text{Second duration} = \text{first duration} \times \text{first bandwidth} / \text{to-be-allocated bandwidth} \quad \text{Formula (1)}.$$

For another example, when determining the second duration based on the maximum bandwidth, the first bandwidth, and the first duration, the third device determines the second duration according to a formula (2):

$$\text{Second duration} = \text{first duration} \times \text{first bandwidth} / \text{maximum bandwidth} \quad \text{Formula (2)}.$$

It is assumed that the first duration is 4 ms, the first bandwidth is 20 MHz, and the maximum bandwidth is 80 MHz. When the third device determines that the to-be-allocated bandwidth is 40 MHz, and determines that the to-be-allocated bandwidth is less than the maximum bandwidth, the third device determines, according to the foregoing formula (1), the second duration: 4 ms×20 MHz/40 MHz=2 ms. When the third device determines that the to-be-allocated bandwidth is 160 MHz, and determines that the to-be-allocated bandwidth is greater than the maximum bandwidth, the third device determines, according to the foregoing formula (2), the second duration: 4 ms×20 MHz/80 MHz=1 ms.

Optionally, if the third device receives, from the first device, a plurality of frames that are used to request resources for different links, and different links support different maximum bandwidths, the third device may determine, based on a maximum bandwidth of each link, a resource allocated to each link, or may determine a resource allocated to each link based on a minimum value of maximum bandwidths supported by a plurality of links.

It should be noted that, when the third device receives a plurality of first frames from the first device, if maximum bandwidths of two of the plurality of first frames are the same, a request resource of a later frame in the two frames is used to overwrite a request resource of a previous frame in the two frames; or if maximum bandwidths of two of the plurality of first frames are different, the third device separately maintains request resources for the two different bandwidths.

Correspondingly, on a first device side, if there are a plurality of first links (that is, a plurality of links for different P2P stations), maximum bandwidths of all the first links may be the same or different. Resource requests of a plurality of first links with a same maximum bandwidth may be aggregated and sent to the third device. The first duration carried in the first frame sent each time is a sum of resource requirements of one or more first links with the maximum bandwidth. The first device independently manages resource requests of links with different maximum bandwidths.

For example, the third device receives the first frame and a third frame from the first device, and the third frame is used to request a resource for a link between the first device and a fourth device. In the first frame, the first duration is 2 ms, and the maximum bandwidth is 80 MHz. In the third frame, the first duration is 2 ms, and a maximum bandwidth supported by the link between the first device and the fourth device is 160 MHz. In this case, the third device may learn that the first device needs an 80 MHz channel resource for 2 ms and a 160 MHz channel resource for 2 ms. If the third device determines that a to-be-allocated bandwidth is greater than or equal to 160 MHz, the third device may allocate, to the first device, an 80 MHz channel resource for 2 ms and a 160 MHz channel resource for 2 ms. Alternatively, the third device may allocate an 80 MHz channel resource for 6 ms to the first device, where the 80 MHz channel resource for 4 ms is used by the first device to transmit a resource requirement of 160 MHz reported by the first device. Certainly, the third device may alternatively allocate a 160 MHz channel resource for 4 ms to the first device, where the 160 MHz channel resource for 2 ms is used by the first device to transmit a resource requirement of 80 MHz reported by the first device.

In another possible implementation (denoted as a manner 2), the first information includes the capability information of the first link, and the capability information of the first link includes the MCS or the minimum receiver sensitivity supported by the first link in the first bandwidth.

Correspondingly, a manner in which the third device determines the second duration based on the to-be-allocated bandwidth, the first bandwidth, the first duration, and the first information includes: If the to-be-allocated bandwidth is not equal to the first bandwidth, the third device determines the second duration based on the to-be-allocated bandwidth, the first bandwidth, the first duration, and the capability information of the first link; or if the to-be-allocated bandwidth is equal to the first bandwidth, the third device determines the second duration based on the first duration.

For example, when determining the second duration based on the to-be-allocated bandwidth, the first bandwidth, the first duration, and the capability information of the first link, the third device first determines, based on the MCS or the minimum receiver sensitivity supported by the first link in the first bandwidth, an MCS supported by the first link in the to-be-allocated bandwidth, and then determines the second duration according to a formula (3) or a formula (3'):

$$\text{Second duration} = \text{first duration} \times \text{first bandwidth} / \text{to-be-allocated bandwidth} \times A \quad \text{Formula (3)}.$$

$$\text{Second duration} = \text{first duration} \times \text{first bandwidth} / \text{to-be-allocated bandwidth} / A' \quad \text{Formula (3')}.$$

A represents a ratio of a data transmission rate that can be achieved in a bandwidth over the first link using an MCS supported by the first link in the first bandwidth to a data transmission rate that can be achieved in the same bandwidth over the first link using an MCS supported by the first link in the to-be-allocated bandwidth. A' represents a ratio of a data transmission rate that can be achieved in a bandwidth over the first link using an MCS supported by the first link in the to-be-allocated bandwidth to a data transmission rate that can be achieved in the same bandwidth over the first link using an MCS supported by the first link in the first bandwidth. It should be understood that, receiver sensitivity that corresponds to the MCS supported by the first link in the to-be-allocated bandwidth and that is determined by the third device is equal to or has a smallest difference from the minimum receiver sensitivity supported by the first link in the first bandwidth.

It is assumed that the first duration is 4 ms, the first bandwidth is 20 MHz, and the first link supports an MCS 3 (that is, 16-QAM and a 1/2 bit rate) in the first bandwidth. It can be learned from the table 1 that, in a 20 MHz bandwidth, minimum receiver sensitivity corresponding to the MCS 3 is -74 dBm, that is, the minimum receiver sensitivity supported by the first link in the first bandwidth is -74 dBm. When the third device determines that the to-be-allocated bandwidth is 80 MHz, it can be learned from the table 1 that, in an 80 MHz bandwidth, minimum receiver sensitivity corresponding to an MCS 1 is -73 dBm (which is approximately equal to -74 dBm). Therefore, the third device may expect that when a transmission bandwidth of the first device changes from 20 MHz to 80 MHz, a supported MCS decreases from the MCS 3 to the MCS 1 (that is, quadrature phase shift keying (quadrature phase shift keying, QPSK) and a 1/2 bit rate). It can be learned from the table 2 that equivalent data transmission rates that can be achieved by using the MCS 3 and the MCS 1 in a same bandwidth are 2 and 1 respectively. Therefore, it may be determined that A in the formula (3) is 2. Further, the third device determines, according to the formula (3), that the second duration is: 4 ms×20 MHz/80 MHz×2=2 ms.

It is assumed that the first duration is 1 ms, the first bandwidth is 80 MHz, and the minimum receiver sensitivity supported by the first link in the first bandwidth is -64 dBm. It can be learned from the table 1 that, in a bandwidth of 80 MHz, minimum receiver sensitivity corresponding to an MCS 4 (that is, 16-QAM and a 3/4 code rate) is -64 dBm, that is, the first link supports the MCS 4 in the first bandwidth. When the third device determines that the to-be-allocated bandwidth is 20 MHz, it can be learned from the table 1 that, when receiver sensitivity is -64 dBm in a 20 MHz bandwidth, the third device determines that the first link can support an MCS 7 (64-QAM and a 5/6 bit rate) in the 20 MHz bandwidth. It can be learned from the table 2 that equivalent data transmission rates that can be achieved by using the MCS 4 and the MCS 7 in a same bandwidth are 3 and 5 respectively. Therefore, it may be determined that A in the formula (3) is 0.6. Further, the third device determines, according to the formula (3), that the second duration is: 1 ms×80 MHz/20 MHz×0.6=2.4 ms.

**Table 1**

| Index | Modulation (modulation) | | Rate (R) | Minimum sensitivity (20 MHz PPDU) (dBm) | Minimum sensitivity (40 MHz PPDU) (dBm) | Minimum sensitivity (80 MHz PPDU) (dBm) | Minimum sensitivity (160 MHz or 80+80 MHz PPDU) (dBm) |
|---|---|---|---|---|---|---|---|
| | Dual carrier modulation (dual carrier modulation, DCM) does not exist | DCM exists | | | | | |
| | N/A | Binary phase shift keying (binary phase shift keying, BPSK) | 1/2 | -82 | -79 | -76 | -73 |
| MCS 0 | BPSK | QPSK | 1/2 | -82 | -79 | -76 | -73 |
| MCS 1 | QPSK | 16-QAM | 1/2 | -79 | -76 | -73 | -70 |
| MCS 2 | QPSK | 16-QAM | 3/4 | -77 | -74 | -71 | -68 |
| MCS 3 | 16-QAM | N/A | 1/2 | -74 | -71 | -68 | -65 |
| MCS 4 | 16-QAM | N/A | 3/4 | -70 | -67 | -64 | -61 |
| MCS 5 | 64-QAM | N/A | 2/3 | -66 | -63 | -60 | -57 |
| MCS 6 | 64-QAM | N/A | 3/4 | -65 | -62 | -59 | -56 |
| MCS 7 | 64-QAM | N/A | 5/6 | -64 | -61 | -58 | -55 |
| MCS 8 | 256-QAM | N/A | 3/4 | -59 | -56 | -53 | -50 |
| MCS 9 | 256-QAM | N/A | 5/6 | -57 | -54 | -51 | -48 |

(continued)

| Index | Modulation (modulation) | | Rate (R) | Minimum sensitivity (20 MHz PPDU) (dBm) | Minimum sensitivity (40 MHz PPDU) (dBm) | Minimum sensitivity (80 MHz PPDU) (dBm) | Minimum sensitivity (160 MHz or 80+80 MHz PPDU) (dBm) |
|---|---|---|---|---|---|---|---|
| | Dual carrier modulation (dual carrier modulation, DCM) does not exist | DCM exists | | | | | |
| MCS 10 | 1024-QAM | N/A | 3/4 | -54 | -51 | -48 | -45 |
| MCS 11 | 1024-QAM | N/A | 5/6 | -52 | -49 | -46 | -43 |

**Table 2**

| Index | Modulation (modulation) | Rate (rate) | Equivalent rate in a same bandwidth |
|---|---|---|---|
| MCS 0 | BPSK | 1/2 | 0.5 |
| MCS 1 | QPSK | 1/2 | 1 |
| MCS 2 | QPSK | 3/4 | 1.5 |
| MCS 3 | 16-QAM | 1/2 | 2 |
| MCS 4 | 16-QAM | 3/4 | 3 |
| MCS 5 | 64-QAM | 2/3 | 4 |
| MCS 6 | 64-QAM | 3/4 | 4.5 |
| MCS 7 | 64-QAM | 5/6 | 5 |
| MCS 8 | 256-QAM | 3/4 | 6 |
| MCS 9 | 256-QAM | 5/6 | 6.67 |
| MCS 10 | 1024-QAM | 3/4 | 7.5 |
| MCS 11 | 1024-QAM | 5/6 | 8.333 |
| MCS 12 | 4096-QAM | 3/4 | 9 |
| MCS 13 | 4096-QAM | 5/6 | 10 |

As described above, the first device may send the first frame to the third device by using the frame format shown in FIG. 5, that is, the third device may add the first bandwidth to the first frame. In this case, the first bandwidth may be set by the first device, and the first bandwidth may further serve as a recommended bandwidth. That is, it is recommended that the third device preferentially uses the first bandwidth to allocate a resource to the first device.

It is assumed that the first duration set by the first device is 1 ms, the first bandwidth is 80 MHz, and the first bandwidth-related parameter field is set to the MCS 13. In this case, when the third device determines that the to-be-allocated bandwidth is 20 MHz, the third device can expect that when a transmission bandwidth of the first device changes from 80 MHz to 20 MHz, corresponding power spectral density increases by four times, that is, 6 dB. However, because the first device already supports a highest MCS in an 80 MHz bandwidth, that is, the MCS 13, even if higher receive power spectral density can be obtained by reducing the bandwidth, the MCS cannot be further improved. In this case, the third device determines that the first device can still support the MCS 13 in a 20 MHz bandwidth, and further determines that A in the foregoing formula (3) is 1. Further, the third device determines, according to the formula (3), that the second duration is: 1 ms×80 MHz/20 MHz=4 ms.

For another example, when determining the second duration based on the first bandwidth and the first duration, the third device may determine the first duration as the second duration. Certainly, if the third device cannot allocate a resource requested by the first device for the first link, the second duration determined by the third device may alternatively be less than the first duration.

In still another possible implementation (denoted as a manner 3), the first information includes the capability information of the first link, and the capability information of the first link includes the maximum bandwidth supported by the first link and the MCS or the minimum receiver sensitivity supported by the first link in the first bandwidth.

Correspondingly, a manner in which the third device determines the second duration based on the to-be-allocated bandwidth, the first bandwidth, the first duration, and the first information includes: If the to-be-allocated bandwidth is not equal to the first bandwidth, the third device determines the second duration based on the to-be-allocated bandwidth, the first bandwidth, the first duration, and the MCS or the minimum receiver sensitivity supported by the first link in the first bandwidth. The to-be-allocated bandwidth is less than or equal to the maximum bandwidth. That is, in a case in which the first frame carries the maximum bandwidth, when the third device allocates a resource to the first device, the third device ensures that the to-be-allocated bandwidth is less than or equal to the maximum bandwidth.

Certainly, the third device may also determine a to-be-allocated bandwidth greater than the maximum bandwidth. Therefore, a manner in which the third device determines the second duration based on the to-be-allocated bandwidth, the first bandwidth, the first duration, and the first information may include: If the maximum bandwidth is greater than or equal to the to-be-allocated bandwidth, and the to-be-allocated bandwidth is not equal to the first bandwidth, the third device determines the second duration based on the to-be-allocated bandwidth, the first bandwidth, the first duration, and the MCS or the minimum receiver sensitivity supported by the first link in the first bandwidth; or if the maximum bandwidth is less than the to-be-allocated bandwidth, the third device determines the second duration based on the maximum bandwidth, the first bandwidth, the first duration, and the MCS or the minimum receiver sensitivity supported by the first link in the first bandwidth.

For example, for a manner in which the third device determines the second duration based on the to-be-allocated bandwidth, the first bandwidth, the first duration, and the MCS or the minimum receiver sensitivity supported by the first link in the first bandwidth, refer to the description in the foregoing manner 2.

For another example, when determining the second duration based on the maximum bandwidth, the first bandwidth, the first duration, and the capability information of the first link, the third device first determines, based on the MCS or the minimum receiver sensitivity supported by the first link in the first bandwidth, an MCS supported by the first link in the maximum bandwidth, and then determines the second duration according to a formula (4) or a formula (4'):

$$\text{Second duration} = \text{first duration} \times \text{first bandwidth} / \text{maximum bandwidth} \times B \quad \text{Formula (4).}$$

$$\text{Second duration} = \text{first duration} \times \text{first bandwidth} / \text{maximum bandwidth} / B' \quad \text{Formula (4').}$$

B represents a ratio of a data transmission rate that can be achieved in a bandwidth over the first link using an MCS supported by the first link in the first bandwidth to a data transmission rate that can be achieved in the same bandwidth over the first link using an MCS supported by the first link in the maximum bandwidth. B' represents a ratio of a data transmission rate that can be achieved in a bandwidth over the first link using an MCS supported by the first link in maximum bandwidth to a data transmission rate that can be achieved in the same bandwidth over the first link using an MCS supported by the first link in the first bandwidth. It should be understood that, receiver sensitivity that corresponds to the MCS supported by the first link in the maximum bandwidth and that is determined by the third device is equal to or has a smallest difference from the minimum receiver sensitivity supported by the first link in the first bandwidth.

Specifically, for a manner in which the third device determines the second duration based on the maximum bandwidth, the first bandwidth, the first duration, and the capability information of the first link, refer to the description in the foregoing manner 2.

In still another possible implementation (denoted as a manner 4), the first information includes the M adjustment parameters corresponding to the N bandwidth ranges.

Correspondingly, a manner in which the third device determines the second duration based on the to-be-allocated bandwidth, the first bandwidth, the first duration, and the first information includes: If the to-be-allocated bandwidth does not fall within any one of the N bandwidth ranges, the third device determines the second duration based on the to-be-allocated bandwidth, the first bandwidth, and the first duration; or if the to-be-allocated bandwidth falls within an $n^{th}$ bandwidth range of the N bandwidth ranges, the third device determines the second duration based on the to-be-allocated bandwidth, the first bandwidth, the first duration, and an adjustment parameter corresponding to the $n^{th}$ bandwidth range.

For example, when determining the second duration based on the to-be-allocated bandwidth, the first bandwidth, and the first duration, the third device determines the second duration according to the foregoing formula (1).

For another example, when determining the second duration based on the to-be-allocated bandwidth, the first bandwidth, the first duration, and the adjustment parameter corresponding to the $n^{th}$ bandwidth range, the third device determines the second duration according to a formula (5) or a formula (5'):

$$\text{Second duration=first duration}\times\text{first bandwidth/to-be-allocated bandwidth}\times C_n$$

Formula (5).

$$\text{Second duration=first duration}\times\text{first bandwidth/to-be-allocated bandwidth}/C_n'$$ Formula

(5').

$C_n$ represents a ratio of a data transmission rate that can be achieved in a bandwidth over the first link using a transmission parameter in the first bandwidth to a data transmission rate that can be achieved in the same bandwidth over the first link using a transmission parameter in the $n^{th}$ bandwidth range. $C_n'$ represents a ratio of a data transmission rate that can be achieved in a bandwidth over the first link using an MCS supported by the first link in the $n^{th}$ bandwidth range to a data transmission rate that can be achieved in the same bandwidth over the first link using an MCS supported by the first link in the first bandwidth.

As described above, if the first link does not support the $n^{th}$ bandwidth range, the adjustment parameter corresponding to the $n^{th}$ bandwidth range is set to a preset value, for example, is set to 0. Correspondingly, after the third device receives the first frame, if the adjustment parameter corresponding to the $n^{th}$ bandwidth range is set to the preset value, the third device may determine that the first link does not support the $n^{th}$ bandwidth range. Therefore, the third device does not allocate, to the first link, a bandwidth whose bandwidth value falls within the $n^{th}$ bandwidth range. For example, if an adjustment parameter corresponding to a bandwidth range (80 MHz, 160 MHz] is not the preset value, but an adjustment parameter corresponding to a bandwidth range (160 MHz, 320 MHz] is the preset value, the third device determines that the first link does not support a bandwidth greater than 160 MHz. Further, the third device does not allocate a bandwidth greater than 160 MHz to the first link.

It is assumed that the first duration is 2 ms, the first bandwidth is 80 MHz, and the first information includes two adjustment parameters. A first adjustment parameter corresponds to a bandwidth range (80 MHz, 160 MHz], and A second adjustment parameter corresponds to a bandwidth range (160 MHz, 320 MHz]. It is assumed that the first link supports two spatial streams and an MCS 11 in a bandwidth of 80 MHz, supports two spatial streams and an MCS 9 in a bandwidth range (80 MHz, 160 MHz], and supports two spatial streams and an MCS 6 in a bandwidth range (160 MHz, 320 MHz]. In this case, according to the table 2, the first adjustment parameter may be set to 1.25 or 0.8, and the second adjustment parameter may be set to 1.85 or 0.54.

When the third device determines that the to-be-allocated bandwidth is 40 MHz, and determines that the to-be-allocated bandwidth does not fall within the bandwidth range (80 MHz, 160 MHz], or does not fall within the bandwidth range (160 MHz, 320 MHz], the third device determines, according to the foregoing formula (1), the second duration: 2 ms×80 MHz/40 MHz=4 ms. When the third device determines that the to-be-allocated bandwidth is 160 MHz, and determines that the to-be-allocated bandwidth falls within the bandwidth range (80 MHz, 160 MHz], the third device determines, according to the foregoing formula (5), the second duration: 2 ms×80 MHz/160 MHz×1.25=1.25 ms, or determines, according to the foregoing formula (5'), the second duration: 2 ms×80 MHz/160 MHz/0.8=1.25 ms. When the third device determines that the to-be-allocated bandwidth is 320 MHz, and determines that the to-be-allocated bandwidth falls within the bandwidth range (160 MHz, 320 MHz], the third device determines, according to the foregoing formula (5), the second duration: 2 ms×80 MHz/320 MHz×1.85=0.925 ms, or determines, according to the foregoing formula (5'), the second duration: 4 ms×160 MHz/80 MHz/0.54=0.925 ms.

It should be understood that, in the foregoing examples, the adjustment parameter corresponding to the $n^{th}$ bandwidth range is determined based on MCSs and NSSs that are supported by the first link in different bandwidths. In specific implementation, when the adjustment parameter corresponding to the $n^{th}$ bandwidth range is determined, impact of another transmission parameter on data transmission rates in different bandwidths may also be considered.

Optionally, if the first information includes M adjustment parameters corresponding to N bandwidths, a manner in which the third device determines the second duration based on the to-be-allocated bandwidth, the first bandwidth, the first duration, and the first information includes: If the to-be-allocated bandwidth is not equal to any bandwidth of the N bandwidths, the third device determines the second duration based on the to-be-allocated bandwidth, the first bandwidth, and the first duration; or if the to-be-allocated bandwidth is equal to an $n^{th}$ bandwidth of the N bandwidths, the third device determines the second duration based on the to-be-allocated bandwidth, the first bandwidth, the first duration, and an adjustment parameter corresponding to the $n^{th}$ bandwidth.

For example, when determining the second duration based on the to-be-allocated bandwidth, the first bandwidth, and the first duration, the third device determines the second duration according to the foregoing formula (1).

For another example, when determining the second duration based on the to-be-allocated bandwidth, the first bandwidth, the first duration, and the adjustment parameter corresponding to the $n^{th}$ bandwidth, the third device determines the second duration according to the formula (5) or the formula (5').

Optionally, the first frame further includes indication information, and the indication information indicates whether the first link includes a station (20 MHz-only STA) that supports only a 20 MHz bandwidth. Correspondingly, after the third device receives the first frame, if the indication information indicates that the first link does not include the station that supports only a 20 MHz bandwidth, the third device determines the second duration according to the method in the manner 4. If the indication information indicates that the first link includes the station that supports only a 20 MHz bandwidth, the third device allocates a 20 MHz channel resource to the first link.

In another possible implementation (denoted as a manner 5), the first information includes the capability information of the first link and the M adjustment parameters corresponding to the N bandwidth ranges, and the capability information of the first link includes the maximum bandwidth supported by the first link.

Correspondingly, a manner in which the third device determines the second duration based on the to-be-allocated bandwidth, the first bandwidth, the first duration, and the first information includes: If the to-be-allocated bandwidth does not fall within any one of the N bandwidth ranges, the third device determines the second duration based on the to-be-allocated bandwidth, the first bandwidth, and the first duration; or if the to-be-allocated bandwidth falls within an $n^{th}$ bandwidth range of the N bandwidth ranges, the third device determines the second duration based on the to-be-allocated bandwidth, the first bandwidth, the first duration, and an adjustment parameter corresponding to the $n^{th}$ bandwidth range. The to-be-allocated bandwidth is less than or equal to the maximum bandwidth. That is, in a case in which the first frame carries the maximum bandwidth, when the third device allocates a resource to the first device, the third device ensures that the to-be-allocated bandwidth is less than or equal to the maximum bandwidth.

Certainly, the third device may also determine a to-be-allocated bandwidth greater than the maximum bandwidth. Therefore, a manner in which the third device determines the second duration based on the to-be-allocated bandwidth, the first bandwidth, the first duration, and the first information may include: If the maximum bandwidth is greater than or equal to the to-be-allocated bandwidth, and the to-be-allocated bandwidth does not fall within any one of the N bandwidth range, the third device determines the second duration based on the to-be-allocated bandwidth, the first bandwidth, and the first duration; or if the maximum bandwidth is less than the to-be-allocated bandwidth, and the maximum bandwidth does not fall within any one of the N bandwidth ranges, the third device determines the second duration based on the maximum bandwidth, the first bandwidth, and the first duration; or if the maximum bandwidth is greater than or equal to the to-be-allocated bandwidth, and the to-be-allocated bandwidth falls within an $n^{th}$ bandwidth range of the N bandwidth ranges, the third device determines the second duration based on the to-be-allocated bandwidth, the first bandwidth, the first duration, and an adjustment parameter corresponding to the $n^{th}$ bandwidth range; or if the maximum bandwidth is less than the to-be-allocated bandwidth, and the maximum bandwidth falls within an $n^{th}$ bandwidth range, the first device determines the second duration based on the maximum bandwidth, the first bandwidth, the first duration, and an adjustment parameter corresponding to the $n^{th}$ bandwidth range.

For example, when determining the second duration based on the to-be-allocated bandwidth, the first bandwidth, and the first duration, the third device determines the second duration according to the foregoing formula (1).

For another example, when determining the second duration based on the maximum bandwidth, the first bandwidth, and the first duration, the third device determines the second duration according to the foregoing formula (2).

For another example, when determining the second duration based on the to-be-allocated bandwidth, the first bandwidth, the first duration, and the adjustment parameter corresponding to the $n^{th}$ bandwidth range, the third device determines the second duration according to the formula (5) or the formula (5').

For another example, when determining the second duration based on the maximum bandwidth, the first bandwidth, the first duration, and the adjustment parameter corresponding to the $n^{th}$ bandwidth range, the third device determines the second duration according to the foregoing formula (6) or the formula (6'):

$$\text{Second duration} = \text{first duration} \times \text{first bandwidth} / \text{maximum bandwidth} \times C_n \quad \text{Formula (6).}$$

$$\text{Second duration} = \text{first duration} \times \text{first bandwidth} / \text{maximum bandwidth} / C_n{}' \quad \text{Formula (6').}$$

$C_n$ represents a ratio of a data transmission rate that can be achieved in a bandwidth over the first link using a transmission parameter in the first bandwidth to a data transmission rate that can be achieved in the same bandwidth over the first link using a transmission parameter in the $n^{th}$ bandwidth range. $C_n{}'$ represents a ratio of a data transmission rate that can be achieved in a bandwidth over the first link using an MCS supported by the first link in the $n^{th}$ bandwidth range to a data transmission rate that can be achieved in the same bandwidth over the first link using an MCS supported by the first link in the first bandwidth.

In this embodiment of this application, in addition to the first duration, the first frame sent by the first device to the third device further includes the first information used to determine the second duration. This helps the third device allocate a more accurate time resource to a link between the first device and the second device.

For example, when the first information includes the capability information of the first link, when determining the second duration, the third device may consider the capability information of the first link, to allocate a more accurate time resource to the first link.

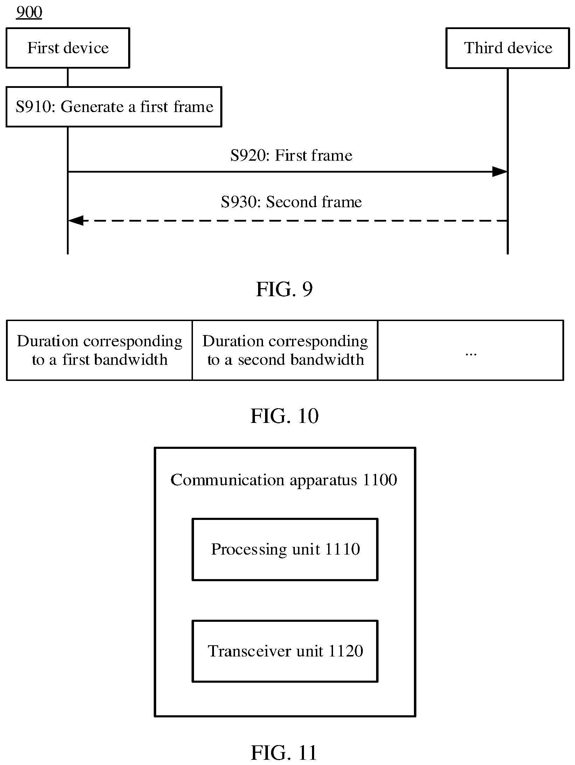

FIG. 9 is a schematic flowchart of a resource allocation method 900 according to another embodiment of this application. The method 900 may be applied to the network architecture shown in FIG. 1. The following describes in detail steps of the method 900 shown in FIG. 9.

S910: A first device generates a first frame.

S920: The first device sends the first frame. Correspondingly, in S920, a third device receives the first frame.

The first frame is used to request a resource for a first link, and the first link is a link between the first device and a second device. The first frame includes M pieces of duration corresponding to N bandwidths, and duration corresponding to an $n^{th}$ bandwidth is duration required for data transmission over the first link in the $n^{th}$ bandwidth. N and n are positive integers, and $1 \leq n \leq N$. For example, a frame format of the first frame is shown in FIG. 10.

For example, the first frame may be referred to as a required resource request frame or a request frame. This is not limited in this embodiment of this application.

For example, if the first link supports the $n^{th}$ bandwidth, the first device may set, based on a transmission requirement of the first device, the duration corresponding to the $n^{th}$ bandwidth. If the first link does not support the $n^{th}$ bandwidth, the first device may set the duration corresponding to the $n^{th}$ bandwidth to a preset value. For example, the first device may set the duration corresponding to the $n^{th}$ bandwidth to 0.

Correspondences between N bandwidths and M pieces of duration are not limited in this embodiment of this application.

In an example, N bandwidths one-to-one correspond to M pieces of duration, that is, N=M. For example, if the first link supports the N bandwidths, the M pieces of duration that one-to-one correspond to the N bandwidths may be set.

In another example, M pieces of duration one-to-one correspond to M bandwidths of N bandwidths, that is, M<N. For example, if the first link does not support some of the N bandwidths, M pieces of duration corresponding to bandwidths supported by the first link may be set.

For example, the N bandwidths separately include one or more of the following: 20 MHz, 80 MHz, 160 MHz, and 320 MHz.

In S920, after the third device receives the first frame from the first device, if the third device can allocate a resource to the first device, the third device determines, based on the M pieces of duration carried in the first frame, second duration allocated to a second link, and sends a second frame to the first device, where the second frame includes the second duration.

S930: The third device sends the second frame. Correspondingly, in S930, the first device receives the second frame.

The second frame includes the second duration, and the second duration is determined based on a to-be-allocated bandwidth and the M pieces of duration.

For example, the second frame may be referred to as a resource allocation frame or an MU-RTS TXS TF. This is not limited in this embodiment of this application.

In an example, if the to-be-allocated bandwidth is equal to the $n^{th}$ bandwidth of the N bandwidths, the third device determines the duration corresponding to the $n^{th}$ bandwidth as the second duration. Certainly, if the third device cannot allocate a resource requested by the first device for the first link, the second duration determined by the third device may alternatively be less than the duration corresponding to the $n^{th}$ bandwidth.

In another example, if the to-be-allocated bandwidth is not equal to any one of the N bandwidths, the third device determines the second duration based on a to-be-transmission bandwidth and the M pieces of duration.

For example, the first frame received by the third device includes three pieces of duration, $1^{st}$ duration corresponds to an 80 MHz bandwidth, $2^{nd}$ duration corresponds to a 160 MHz bandwidth, and $3^{rd}$ duration corresponds to a 320 MHz bandwidth. If the to-be-allocated bandwidth is equal to 80 MHz, the third device determines the $1^{st}$ duration as the second duration, or if the to-be-allocated bandwidth is equal to 160 MHz, the third device determines the $2^{nd}$ duration as the second duration, or if the to-be-allocated bandwidth is equal to 320 MHz, the third device determines the $3^{rd}$ duration as the second duration. If the to-be-allocated bandwidth is less than 80 MHz, the third device determines, according to the following formula, the second duration: $1^{st}$ duration $\times$ 80 MHz/to-be-allocated bandwidth=second duration.

As described above, if the first link does not support the $n^{th}$ bandwidth, the duration corresponding to the $n^{th}$ bandwidth is set to a preset value, for example, is set to 0. Correspondingly, after the third device receives the first frame, if the duration corresponding to the $n^{th}$ bandwidth is set to the preset value, the third device may determine that the first link does not support the $n^{th}$ bandwidth. Therefore, the third device does not allocate, to the first link, a bandwidth whose bandwidth value is greater than or equal to the $n^{th}$ bandwidth. For example, if duration corresponding to the 80 MHz bandwidth is not the preset value, but duration corresponding to the 160 MHz bandwidth is the preset value, the third device determines that the first link does not support a bandwidth greater than or equal to 160 MHz, and further, the third device does not allocate, to the first link, the bandwidth greater than or equal to 160 MHz.

In this embodiment of this application, the first frame sent by the first device to the third device includes a plurality of pieces of duration corresponding to different bandwidths. This helps the third device allocate a more accurate time resource to a link between the first device and the second device based on a bandwidth that is currently to be allocated.

The foregoing describes in detail methods in embodiments of this application with reference to FIG. 3 to FIG. 10, and the following describes in detail apparatuses in embodiments of this application with reference to FIG. 11 to FIG. 14. It should be noted that the apparatuses shown in FIG. 11 to FIG. 14 may implement the steps in the foregoing methods. For brevity, details are not described herein again.

FIG. 11 is a schematic block diagram of a communication apparatus according to an embodiment of this application. As shown in FIG. 11, a communication apparatus 1100 may include a processing unit 1110 and a transceiver unit 1120.

In a possible design, the communication apparatus 1100 may correspond to the first device in the foregoing method embodiments. For example, the communication apparatus 1100 may be the first device, or a component (such as a chip or a chip system) configured in the first device.

It should be understood that the communication apparatus 1100 may correspondingly implement a corresponding function of the first device in the method 300 or 900 in embodiments of this application, and the communication apparatus 1100 may be a first device, or the communication apparatus may be a component (for example, a chip or a circuit) that can be configured in the first device. For example, the communication apparatus 1100 may include units configured to perform the method performed by the first device in the method 300 in FIG. 3 or the method 900 in FIG. 9. In addition, units in the communication apparatus 1100 and the foregoing other operations and/or functions are respectively used to implement a corresponding procedure of the method 300 in FIG. 3 or the method 900 in FIG. 9. It should be understood that a specific process in which the units perform the foregoing corresponding steps is described in detail in the foregoing method embodiments. For brevity, details are not described herein.

In a possible implementation, the transceiver unit 1110 in the communication apparatus 1100 may be implemented by using an input/output interface, and the processing unit 1120 in the communication apparatus 1100 may be implemented by using a processor, a microprocessor, an integrated circuit, or the like integrated in the chip or the chip system.

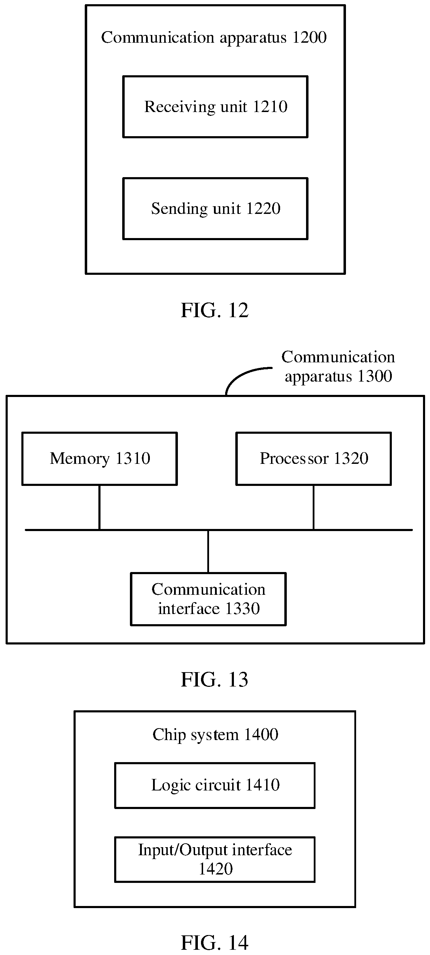

FIG. 12 is a schematic block diagram of a communication apparatus according to an embodiment of this application. As shown in FIG. 12, a communication apparatus 1200 may include a receiving unit 1210 and a sending unit 1220.

In a possible design, the communication apparatus 1200 may correspond to the third device in the foregoing method embodiments. For example, the communication apparatus 1200 may be the third device or a component (such as a chip or a chip system) configured in the third device.

It should be understood that the communication apparatus 1200 may correspondingly implement a corresponding function of the third device in the method 300 or 900 in embodiments of this application, and the communication apparatus 1200 may be the third device, or the communication apparatus may be a component (for example, a chip or a circuit) that can be configured in the third device. For example, the communication apparatus 1200 may include units configured to perform the method performed by the third device in the method 300 in FIG. 3 or the method 900 in FIG. 9. In addition, units in the communication apparatus 1200 and the foregoing other operations and/or functions are respectively used to implement a corresponding procedure of the method 300 in FIG. 3 or the method 900 in FIG. 9. It should be understood that a specific process in which the units perform the foregoing corresponding steps is described in detail in the foregoing method embodiments. For brevity, details are not described herein.

It should be further understood that, in a possible implementation, the receiving unit 1210 in the communication apparatus 1200 may be implemented by using an input interface, and the sending unit 1220 in the communication apparatus 1200 may be implemented by using an output interface.

FIG. 13 is a schematic block diagram of a communication apparatus according to another embodiment of this application. A communication apparatus 1300 shown in FIG. 13 may include a memory 1310, a processor 1320, and a communication interface 1330. The memory 1310, the processor 1320, and the communication interface 1330 are connected through an internal connection path. The memory 1310 is configured to store instructions, and the processor 1320 is configured to execute the instructions stored in the memory 1310, to control an input/output interface to receive/send a packet. Optionally, the memory 1310 may be coupled to the processor 1320 by using an interface, or integrated with the processor 1320.

It should be noted that the communication interface 1330 uses a transceiver apparatus such as but not limited to a transceiver, to implement communication between the communication apparatus 1300 and another device or a communication network. The communication interface 1330 may further include an input/output interface (input/output interface).

In an implementation process, steps in the foregoing methods can be implemented by using a hardware integrated logic circuit in the processor 1320, or by using instructions in a form of software. The method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 1310, and the processor 1320 reads information in the memory 1310, and completes the steps in the foregoing methods in combination with hardware of the processor 1320. To avoid repetition, details are not described herein again.

It should be understood that, the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It should also be understood that in this embodiment of this application, the memory may include a read-only memory and a random access memory, and provide instructions and data to the processor. A part of the processor may further include a non-volatile random access memory. For example, the processor may further store information of a device type.

FIG. 14 is a schematic diagram of a chip system according to an embodiment of this application. The chip system herein may also be a system including circuits. A chip system 1400 shown in FIG. 14 includes a logic circuit 1410 and an input/output interface (input/output interface) 1420. The logic circuit is configured to: be coupled to an input interface, and transmit data (for example, first indication information) by using the input/output interface, to perform the method shown in FIG. 3 or FIG. 9.

An embodiment of this application further provides a processing apparatus, including a processor and an interface. The processor is configured to perform the method in any one of the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, steps in the foregoing methods can be implemented by using a hardware integrated logic circuit in the processor, or by using instructions in a form of software. Steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory, and completes the steps in the foregoing methods in combination with hardware of the processor. To avoid repetition, details are not described herein again.

It should be noted that, the processor in this embodiment of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. Steps of the method disclosed with reference to embodiments of this application may be directly performed by a hardware decoding processor, or may be performed by using a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory, and completes the steps in the foregoing methods in combination with hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the methods provided in embodiments of this application, this application further provides a computer program product. The computer program product includes computer program code. When the computer program code runs on a computer, the computer is enabled to perform the method performed by each network entity in the embodiment shown in FIG. 3 or FIG. 9.

According to the methods provided in embodiments of this application, this application further provides a computer-readable storage medium. The computer-readable storage medium stores program code. When the program code runs on a computer, the computer is enabled to perform the method performed by each network entity in the embodiment shown in FIG. 3 or FIG. 9.

According to the methods provided in embodiments of this application, this application further provides a system. The system includes the foregoing first device and the third device.

A network entity in the foregoing apparatus embodiments completely corresponds to a network entity in the method embodiments, and corresponding modules or units perform corresponding steps. For example, a transceiver unit (transceiver) performs receiving or sending steps in the method embodiments, and a processing unit (processor) performs steps other than sending and receiving. For a function of a specific unit, refer to a corresponding method embodiment. There may be one or more processors.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with another system by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

In the foregoing embodiments, all or some of the functions of the function units may be implemented by using software, hardware, firmware, or any combination thereof. When software is used to implement the embodiments, all or a part of the embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

When the functions are implemented in the form of a software functional unit and sold or used as an independent product, the functions may be stored in a computer-readable storage medium. Based on such an understanding, a part that is of the technical solutions of this application and that essentially makes contribution or a part of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A resource allocation method, comprising:

    generating, by a first device, a first frame that is used to request a resource for a first link, wherein the first link is a link between the first device and a second device, the first frame comprises first duration and first information, the first duration is duration required for data transmission over the first link based on a first bandwidth, the first information is used to determine second duration, and the second duration is duration that is allocated by a third device to the first link and that is used for data transmission; and
    sending, by the first device, the first frame to the third device.

2.  The method according to claim 1, wherein the first information comprises at least one of the following types: capability information of the first link and M adjustment parameters corresponding to N bandwidth ranges, wherein both N and M are positive integers.

3.  The method according to claim 2, wherein the first information comprises the capability information and the M adjustment parameters, and the capability information comprises a maximum bandwidth supported by the first link.

4.  The method according to claim 2 or 3, wherein an adjustment parameter corresponding to an $n^{th}$ bandwidth range is a ratio of a data transmission rate that can be achieved in a bandwidth over the first link using a transmission parameter in the first bandwidth to a data transmission rate that can be achieved in the same bandwidth over the first link using a transmission parameter in the $n^{th}$ bandwidth range, n is a positive integer, and $1 \le n \le N$.

5.  The method according to claim 2 or 3, wherein if the first link does not support an $n^{th}$ bandwidth range, an adjustment parameter corresponding to the $n^{th}$ bandwidth range is set to a preset value, n is a positive integer, and $1 \le n \le N$.

6.  The method according to any one of claims 2 to 5, wherein values of N and M are the same.

7.  The method according to claim 2, wherein the first information comprises the capability information, and the capability

23

information comprises at least one of the following types: a maximum bandwidth supported by the first link, and a modulation and coding scheme MCS or minimum receiver sensitivity supported by the first link in the first bandwidth.

8. The method according to any one of claims 1 to 7, wherein the method further comprises:
receiving, by the first device, a second frame from the third device, wherein the second frame comprises the second duration.

9. A resource allocation method, comprising:

receiving, by a third device, a first frame, wherein the first frame is used to request a resource for a first link, the first link is a link between a first device and a second device, the first frame comprises first duration and first information, the first duration is duration required for data transmission over the first link based on a first bandwidth, the first information is used to determine second duration, and the second duration is duration that is allocated by the third device to the first link and that is used for data transmission; and
sending, by the third device, a second frame to the first device, wherein the second frame comprises the second duration.

10. The method according to claim 9, wherein the first information comprises at least one of the following types: capability information of the first link and M adjustment parameters corresponding to N bandwidth ranges, wherein both N and M are positive integers.

11. The method according to claim 10, wherein the first information comprises the M adjustment parameters; and

if a to-be-allocated bandwidth does not fall within any one of the N bandwidth ranges, the second duration is determined based on the first bandwidth, the first duration, and the to-be-allocated bandwidth; or
if a to-be-allocated bandwidth falls within an $n^{th}$ bandwidth range of the N bandwidth ranges, the second duration is determined based on the first bandwidth, the first duration, the to-be-allocated bandwidth, and an adjustment parameter corresponding to the $n^{th}$ bandwidth range, wherein n is a positive integer, and $1 \leq n \leq N$.

12. The method according to claim 10, wherein the first information comprises the capability information and the M adjustment parameters, and the capability information comprises a maximum bandwidth supported by the first link;

if a to-be-allocated bandwidth does not fall within any one of the N bandwidth ranges, the second duration is determined based on the to-be-allocated bandwidth, the first bandwidth, and the first duration; or
if a to-be-allocated bandwidth falls within an $n^{th}$ bandwidth range of the N bandwidth ranges, the second duration is determined based on the to-be-allocated bandwidth, the first bandwidth, the first duration, and an adjustment parameter corresponding to the $n^{th}$ bandwidth range, wherein n is a positive integer, and $1 \leq n \leq N$; and
the to-be-allocated bandwidth is less than or equal to the maximum bandwidth.

13. The method according to any one of claims 10 to 12, wherein the adjustment parameter corresponding to the $n^{th}$ bandwidth range is a ratio of a data transmission rate that can be achieved in a bandwidth over the first link using a transmission parameter in the first bandwidth to a data transmission rate that can be achieved in the same bandwidth over the first link using a transmission parameter in the $n^{th}$ bandwidth range, n is a positive integer, and $1 \leq n \leq N$.

14. The method according to any one of claims 10 to 12, wherein if the first link does not support the $n^{th}$ bandwidth range, the adjustment parameter corresponding to the $n^{th}$ bandwidth range is set to a preset value, n is a positive integer, and $1 \leq n \leq N$.

15. The method according to any one of claims 10 to 14, wherein values of N and M are the same.

16. The method according to claim 10, wherein the first information comprises the capability information, and the capability information comprises at least one of the following types: a maximum bandwidth supported by the first link, and a modulation and coding scheme MCS or minimum receiver sensitivity supported by the first link in the first bandwidth.

17. The method according to claim 16, wherein the capability information comprises the maximum bandwidth, the second duration is determined based on a to-be-allocated bandwidth, the first bandwidth, and the first duration, and the to-be-allocated bandwidth is less than or equal to the maximum bandwidth.

18. The method according to claim 16, wherein the capability information comprises the MCS or the minimum receiver sensitivity supported by the first link in the first bandwidth; and
   if a to-be-allocated bandwidth is not equal to the first bandwidth, the second duration is determined based on the to-be-allocated bandwidth, the first bandwidth, the first duration, and the capability information.

19. The method according to claim 16, wherein the capability information comprises the maximum bandwidth, and the MCS or the minimum receiver sensitivity supported by the first link in the first bandwidth; and
   if a to-be-allocated bandwidth is not equal to the first bandwidth, the second duration is determined based on the to-be-allocated bandwidth, the first bandwidth, the first duration, and the MCS or the minimum receiver sensitivity supported by the first link in the first bandwidth, and the to-be-allocated bandwidth is less than or equal to the maximum bandwidth.

20. A communication apparatus, comprising a processing unit and a transceiver unit, wherein

   the processing unit is configured to generate a first frame that is used to request a resource for a first link, wherein the first link is a link between the communication apparatus and a second device, the first frame comprises first duration and first information, the first duration is duration required for data transmission over the first link based on a first bandwidth, the first information is used to determine second duration, and the second duration is duration that is allocated by a third device to the first link and that is used for data transmission; and
   the transceiver unit is configured to send the first frame to the third device.

21. The communication apparatus according to claim 20, wherein the first information comprises at least one of the following types: capability information of the first link and M adjustment parameters corresponding to N bandwidth ranges, wherein both N and M are positive integers.

22. The communication apparatus according to claim 21, wherein the first information comprises the capability information and the M adjustment parameters, and the capability information comprises a maximum bandwidth supported by the first link.

23. The communication apparatus according to claim 21 or 22, wherein an adjustment parameter corresponding to an $n^{th}$ bandwidth range is a ratio of a data transmission rate that can be achieved in a bandwidth over the first link using a transmission parameter in the first bandwidth to a data transmission rate that can be achieved in the same bandwidth over the first link using a transmission parameter in the $n^{th}$ bandwidth range, n is a positive integer, and $1 \leq n \leq N$.

24. The communication apparatus according to claim 21 or 22, wherein if the first link does not support an $n^{th}$ bandwidth range, an adjustment parameter corresponding to the $n^{th}$ bandwidth range is set to a preset value, n is a positive integer, and $1 \leq n \leq N$.

25. The communication apparatus according to any one of claims 21 to 24, wherein values of N and M are the same.

26. The communication apparatus according to claim 21, wherein the first information comprises the capability information, and the capability information comprises at least one of the following types: a maximum bandwidth supported by the first link, and a modulation and coding scheme MCS or minimum receiver sensitivity supported by the first link in the first bandwidth.

27. The communication apparatus according to any one of claims 20 to 26, wherein the transceiver unit is further configured to receive a second frame from the third device, and the second frame comprises the second duration.

28. A communication apparatus, comprising a receiving unit and a sending unit, wherein

   the receiving unit is configured to receive a first frame, wherein the first frame is used to request a resource for a first link, the first link is a link between a first device and a second device, the first frame comprises first duration and first information, the first duration is duration required for data transmission over the first link based on a first bandwidth, the first information is used to determine second duration, and the second duration is duration that is allocated by the communication apparatus to the first link and that is used for data transmission; and the sending unit is configured to send a second frame to the first device, wherein the second frame comprises the second duration.

29. The communication apparatus according to claim 28, wherein the first information comprises at least one of the following types: capability information of the first link and M adjustment parameters corresponding to N bandwidth ranges, wherein both N and M are positive integers.

30. The communication apparatus according to claim 29, wherein the first information comprises the M adjustment parameters; and

if a to-be-allocated bandwidth does not fall within any one of the N bandwidth ranges, the second duration is determined based on the first bandwidth, the first duration, and the to-be-allocated bandwidth; or if a to-be-allocated bandwidth falls within an $n^{th}$ bandwidth range of the N bandwidth ranges, the second duration is determined based on the first bandwidth, the first duration, the to-be-allocated bandwidth, and an adjustment parameter corresponding to the $n^{th}$ bandwidth range, wherein n is a positive integer, and $1 \leq n \leq N$.

31. The communication apparatus according to claim 29, wherein the first information comprises the capability information and the M adjustment parameters, and the capability information comprises a maximum bandwidth supported by the first link;

if a to-be-allocated bandwidth does not fall within any one of the N bandwidth ranges, the second duration is determined based on the to-be-allocated bandwidth, the first bandwidth, and the first duration; or if a to-be-allocated bandwidth falls within an $n^{th}$ bandwidth range of the N bandwidth ranges, the second duration is determined based on the to-be-allocated bandwidth, the first bandwidth, the first duration, and an adjustment parameter corresponding to the $n^{th}$ bandwidth range, wherein n is a positive integer, and $1 \leq n \leq N$; and the to-be-allocated bandwidth is less than or equal to the maximum bandwidth.

32. The communication apparatus according to any one of claims 29 to 31, wherein the adjustment parameter corresponding to the $n^{th}$ bandwidth range is a ratio of a data transmission rate that can be achieved in a bandwidth over the first link using a transmission parameter in the first bandwidth to a data transmission rate that can be achieved in the same bandwidth over the first link using a transmission parameter in the $n^{th}$ bandwidth range, n is a positive integer, and $1 \leq n \leq N$.

33. The communication apparatus according to any one of claims 29 to 31, wherein if the first link does not support the $n^{th}$ bandwidth range, the adjustment parameter corresponding to the $n^{th}$ bandwidth range is set to a preset value, n is a positive integer, and $1 \leq n \leq N$.

34. The communication apparatus according to any one of claims 29 to 33, wherein values of N and M are the same.

35. The communication apparatus according to claim 29, wherein the first information comprises the capability information, and the capability information comprises at least one of the following types: a maximum bandwidth supported by the first link, and a modulation and coding scheme MCS or minimum receiver sensitivity supported by the first link in the first bandwidth.

36. The communication apparatus according to claim 35, wherein the capability information comprises the maximum bandwidth, the second duration is determined based on a to-be-allocated bandwidth, the first bandwidth, and the first duration, and the to-be-allocated bandwidth is less than or equal to the maximum bandwidth.

37. The communication apparatus according to claim 35, wherein the capability information comprises the MCS or the minimum receiver sensitivity supported by the first link in the first bandwidth; and if a to-be-allocated bandwidth is not equal to the first bandwidth, the second duration is determined based on the to-be-allocated bandwidth, the first bandwidth, the first duration, and the capability information.

38. The communication apparatus according to claim 35, wherein the capability information comprises the maximum bandwidth, and the MCS or the minimum receiver sensitivity supported by the first link in the first bandwidth; and if a to-be-allocated bandwidth is not equal to the first bandwidth, the second duration is determined based on the to-be-allocated bandwidth, the first bandwidth, the first duration, and the MCS or the minimum receiver sensitivity supported by the first link in the first bandwidth, and the to-be-allocated bandwidth is less than or equal to the maximum bandwidth.

**39.** A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 8, or enable the communication apparatus to perform the method according to any one of claims 9 to 19.

**40.** A computer program product, wherein the computer program product comprises a computer program, and when the computer program is run on a computer, the computer is enabled to perform the method according to any one of claims 1 to 8, or the computer is enabled to perform the method according to any one of claims 9 to 19.

**41.** A computer-readable storage medium, wherein the computer-readable storage medium stores a computer program, and when the computer program is run on a computer, the computer is enabled to implement the method according to any one of claims 1 to 8, or the computer is enabled to perform the method according to any one of claims 9 to 19.

**42.** A communication system, comprising:
the communication apparatus according to any one of claims 20 to 27 and/or the communication apparatus according to any one of claims 28 to 38.

FIG. 1

EP 4 362 589 A1

FIG. 2

300

| First device | | Third device |

S310: Generate a first frame

S320: First frame

S330: Second frame

FIG. 3

| First duration | Maximum bandwidth |

FIG. 4

| First duration | First bandwidth | First bandwidth–related parameter |

FIG. 5

| First duration | Maximum bandwidth | First bandwidth–related parameter |

FIG. 6

| First duration | First bandwidth adjustment parameter | Second bandwidth adjustment parameter | ... |

FIG. 7

| First duration | Maximum bandwidth | First bandwidth adjustment parameter | Second bandwidth adjustment parameter | ... |

FIG. 8

EP 4 362 589 A1

900

```
┌─────────────────┐                          ┌─────────────────┐
│  First device   │                          │  Third device   │
└────────┬────────┘                          └────────┬────────┘
┌─────────┴────────────────────┐                      │
│ S910: Generate a first frame │                      │
└─────────┬────────────────────┘                      │
          │      S920: First frame                    │
          │──────────────────────────────────────────▶│
          │      S930: Second frame                    │
          │◀─ ─ ─ ─ ─ ─ ─ ─ ─ ─ ─ ─ ─ ─ ─ ─ ─ ─ ─ ─ ─│
          │                                            │
```

FIG. 9

| Duration corresponding to a first bandwidth | Duration corresponding to a second bandwidth | ... |

FIG. 10

```
┌──────────────────────────────────────┐
│   Communication apparatus 1100        │
│                                        │
│   ┌──────────────────────────────┐   │
│   │    Processing unit 1110       │   │
│   └──────────────────────────────┘   │
│                                        │
│   ┌──────────────────────────────┐   │
│   │    Transceiver unit 1120      │   │
│   └──────────────────────────────┘   │
│                                        │
└──────────────────────────────────────┘
```

FIG. 11

Communication apparatus 1200

Receiving unit 1210

Sending unit 1220

FIG. 12

Communication apparatus 1300

Memory 1310

Processor 1320

Communication interface 1330

FIG. 13

Chip system 1400

Logic circuit 1410

Input/Output interface 1420

FIG. 14

# INTERNATIONAL SEARCH REPORT

| International application No. |
|---|
| **PCT/CN2022/107294** |

| A. | CLASSIFICATION OF SUBJECT MATTER |
|---|---|

H04W 72/04(2009.01)i

According to International Patent Classification (IPC) or to both national classification and IPC

| B. | FIELDS SEARCHED |
|---|---|

Minimum documentation searched (classification system followed by classification symbols)

H04W,H04L

Documentation searched other than minimum documentation to the extent that such documents are included in the fields searched

Electronic data base consulted during the international search (name of data base and, where practicable, search terms used)

CNTXT, CNABS, WPABSC, DWPI, EPTXTC, WOTXT, USTXT: 扩展, 共享, 传输机会, 时间, 时长, 带宽, 第一, 第二, 资源, 请求, 分配, extend, share, TXOP, transmission opportunity, time, band, first, second, resource, request, assign

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 112889331 A (QUALCOMM INC.) 01 June 2021 (2021-06-01) description, paragraphs [0129]-[0137] and [0325]-[0366] | 1-42 |
| A | CN 101433022 A (INTERDIGITAL TECHNOLOGY CORPORATION) 13 May 2009 (2009-05-13) entire document | 1-42 |
| A | CN 106304199 A (ZTE CORP.) 04 January 2017 (2017-01-04) entire document | 1-42 |
| A | US 2020077273 A1 (QUALCOMM INC.) 05 March 2020 (2020-03-05) entire document | 1-42 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 October 2022** | **21 October 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/107294**

| Patent document cited in search report | | | Publication date (day/month/year) | Patent family member(s) | | | Publication date (day/month/year) |
|---|---|---|---|---|---|---|---|
| CN | 112889331 | A | 01 June 2021 | US | 2020076552 | A1 | 05 March 2020 |
| | | | | US | 2020076551 | A1 | 05 March 2020 |
| | | | | WO | 2020068385 | A1 | 02 April 2020 |
| | | | | EP | 3847860 | A1 | 14 July 2021 |
| CN | 101433022 | A | 13 May 2009 | AU | 2007243312 | A1 | 08 November 2007 |
| | | | | US | 2007248117 | A1 | 25 October 2007 |
| | | | | KR | 20090008360 | A | 21 January 2009 |
| | | | | TW | 200805976 | A | 16 January 2008 |
| | | | | IN | 8953DELNP2008 | A | 22 May 2009 |
| | | | | IL | 194747 | D0 | 03 August 2009 |
| | | | | KR | 20120096567 | A | 30 August 2012 |
| | | | | CA | 2650555 | A1 | 08 November 2007 |
| | | | | KR | 20090018121 | A | 19 February 2009 |
| | | | | SG | 171603 | A1 | 29 June 2011 |
| | | | | RU | 2008146046 | A | 27 May 2010 |
| | | | | JP | 2012227942 | A | 15 November 2012 |
| | | | | TW | 201042968 | A | 01 December 2010 |
| | | | | JP | 2009534994 | A | 24 September 2009 |
| | | | | AR | 060587 | A1 | 25 June 2008 |
| | | | | WO | 2007127311 | A2 | 08 November 2007 |
| | | | | MX | 2008013570 | A | 31 October 2008 |
| | | | | US | 2012093134 | A1 | 19 April 2012 |
| | | | | BR | PI0710387 | A2 | 09 August 2011 |
| | | | | EP | 2011277 | A2 | 07 January 2009 |
| CN | 106304199 | A | 04 January 2017 | WO | 2016188245 | A1 | 01 December 2016 |
| US | 2020077273 | A1 | 05 March 2020 | EP | 3844992 | A1 | 07 July 2021 |
| | | | | WO | 2020047196 | A1 | 05 March 2020 |
| | | | | US | 2021297865 | A1 | 23 September 2021 |
| | | | | TW | 202017423 | A | 01 May 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2021121990